# EUROPEAN PATENT SPECIFICATION

(11) **EP 4 563 847 B1**
(45) Date of publication and mention of the grant of the patent: **09.12.2026**
(21) Application number: 24206834.4
(22) Date of filing: 16.10.2024
(51) Int. Cl.: F16H 57/04

(54) **TWO-WAY OIL-COLLECTING REDUCER AND ELECTRIC VEHICLE**
BIDIREKTIONALES ÖLSAMMELREDUZIERVENTIL UND ELEKTROFAHRZEUG
RÉDUCTEUR DE COLLECTE D'HUILE À DEUX VOIES ET VÉHICULE ÉLECTRIQUE

(30) Priority: 29.11.2023 CN 202311627823
(43) Date of publication of application: 04.06.2025
(73) Proprietor: Huawei Digital Power Technologies Co., Ltd., Shenzhen, 518043 (CN)
(72) Inventor: LIU, Yuan, Shenzhen, 518043 (CN); CHEN, Fei, Shenzhen, 518043 (CN); HUANGFU, Yuzhao, Shenzhen, 518043 (CN); WANG, Qiang, Shenzhen, 518043 (CN); MENG, Qiang, Shenzhen, 518043 (CN)
(74) Representative: Isarpatent

(56) References cited:
- CN-A- 112 943 908
- DE-A1- 10 254 572
- DE-B3- 102019 102 078
- US-A- 3 529 698

## Description

### TECHNICAL FIELD

This application relates to the field of electric vehicle technologies, and in particular, to a two-way oil-collecting reducer and an electric vehicle.

### BACKGROUND

When a powertrain of an electric vehicle works, a motor runs, and drives a gear train in a reducer to rotate. Bearings and gears of the gear train rotate at a high speed and have heavy load. Surfaces of the bearings and gears also generate a large amount of heat due to friction. If the gear train is not cooled and lubricated in time, a powertrain transmission failure may be caused. In the conventional technology, an oil sump is disposed in the reducer. When a gear wheel works and rotates, lubricating oil in the reducer is churned and thrown into the oil sump from above the oil sump, and the oil sump collects the lubricating oil and transmits the lubricating oil to the gear train for cooling and lubrication, to ensure that components are at an appropriate working temperature. However, for the current oil sump, usually, the lubricating oil can be thrown into the oil sump only when the gear wheel rotates toward the oil sump, oil collecting efficiency is insufficient, and there is still a large amount of lubricating oil at the bottom of the reducer. As a result, an oil churning loss of the gear train is large, and working efficiency of the reducer is affected.

CN 112 943 908 A discloses a lubricating system of a gearbox of a vehicle driving system. The lubricating system comprises a lubricating oil distribution system and a gear oil scraper. A shell serves as a supporting carrier of a gear, a bearing and a lubricating structure and is used for supporting and installing other parts.

DE 10 2019 102 078 B3 discloses a transmission arrangement with a housing design that includes a lubricating oil guide geometry directing oil from one wheel to another in an axial direction, combined with a lubricating oil distribution system that ensures targeted and efficient lubrication of gear meshes, and a lubricating oil reservoir with overflow and calming chambers for thermal management.

DE 102 54 572 A1 discloses a lubricant pan that covers at least 50% of the gearbox housing length and width, with features like drip edges, ribs, and oil channels to collect and distribute lubricant efficiently, reducing splashing and retaining sufficient lubricant volume.

US 3 529 698 A discloses a self-operating lubrication system with a storage reservoir above the gear sump, utilizing a baffle channel to splash lubricant onto the ring gear and directing scoops to collect and redirect it into the reservoir, which then supplies lubricant via gravity to desired locations through spouts or channels, maintaining a constant lubricant level regardless of speed or direction.

### SUMMARY

This application provides a two-way oil-collecting reducer and an electric vehicle.

According to a first aspect, an embodiment of this application provides a two-way oil-collecting reducer. The reducer includes an input gear, an intermediate gear set, an output gear, and an oil sump, the input gear is configured to drive, via the intermediate gear set, the output gear to rotate forward or reversely, a rotation direction of the intermediate gear set is opposite to a rotation direction of the output gear, and the oil sump includes a radial sump opening and a circumferential sump opening. An orientation of the radial sump opening is away from the intermediate gear set along a radial direction of the intermediate gear set. An orientation of the circumferential sump opening faces the output gear along a circumferential direction of the intermediate gear set. The radial sump opening is connected to the circumferential sump opening. The oil sump includes a sump bottom. The sump bottom includes a shallow sump bottom and a deep sump bottom. The deep sump bottom includes two recess sections and a bump section that are connected. The two recess sections are arranged on two sides of the bump section along the circumferential direction of the intermediate gear set.

In this embodiment of this application, the radial sump opening of the oil sump is away from the intermediate gear set along the radial direction of the intermediate gear set, so that an opening direction of the radial sump opening faces upward when the radial sump opening is placed in the reducer. Generally, a radius of the output gear is large. When the output gear rotates and churns oil, a tooth part of the output gear at a high position can throw lubricating oil from the high position into the radial sump opening and then into the oil sump. When a motor rotates reversely, that the motor rotates reversely means that a motor shaft of the motor rotates along a counterclockwise direction, the output gear is driven to rotate along the counterclockwise direction, the output gear rotates toward the oil sump, and the oil sump collects, via the radial sump opening, the lubricating oil led by the output gear by churning oil.

In this embodiment of this application, the circumferential sump opening of the oil sump faces the output gear along the circumferential direction of the intermediate gear set, so that the circumferential sump opening of the oil sump can collect lubricating oil thrown along the circumferential direction of the intermediate gear set. Because a radius of an intermediate driven gear of the intermediate gear set is small, lubricating oil cannot be thrown into the oil sump from a high position. The circumferential sump opening is formed at the oil sump, and the circumferential sump opening can collect lubricating oil thrown from a low position along the circumferential direction of the intermediate gear set, and can further collect lubricating oil thrown from a position of the output gear. When the motor rotates forward, that the motor rotates forward means that the motor shaft of the motor rotates along a clockwise direction, the intermediate gear set is driven to rotate along the counterclockwise direction, and the intermediate gear set rotates toward the circumferential sump opening, to collect lubricating oil thrown when the intermediate gear set rotates along the counterclockwise direction.

In this embodiment of this application, the radial sump opening is connected to the circumferential sump opening, so that an area of an oil collecting opening of the oil sump is larger, and more lubricating oil can be collected. The radial sump opening is connected to the circumferential sump opening. This facilitates processing and manufacturing of the oil sump.

In an embodiment, the oil sump includes two circumferential sump walls and two axial sump walls. The two circumferential sump walls are arranged oppositely along the circumferential direction of the intermediate gear set, and a length of one circumferential sump wall is longer than a length of the other circumferential sump wall along the axial direction of the intermediate gear set. The two axial sump walls are arranged oppositely along the axial direction of the intermediate gear set, and a length of one axial sump wall is shorter than a length of the other axial sump wall along the circumferential direction of the intermediate gear set.

In this embodiment of this application, the two circumferential sump walls and the two axial sump walls of the oil sump are configured to provide storage space for lubricating oil collected by the oil sump. Along the axial direction of the intermediate gear set, the length of the one circumferential sump wall is longer than the length of the other circumferential sump wall. When the one circumferential sump wall is larger, this helps better prevent the lubricating oil churned when the intermediate gear set or the output gear rotates from flying out of the oil sump, thereby reducing an oil churning loss. The other circumferential sump wall is smaller, which helps form the circumferential sump opening, further helps reduce a volume of the oil sump and reduce mounting space occupied by the oil sump in the reducer, and helps the lubricating oil churned when the output gear rotates fly into the oil sump. The two circumferential sump walls are arranged oppositely along the circumferential direction of the intermediate gear set, the length of the one circumferential sump wall is longer than the length of the other circumferential sump wall along the axial direction of the intermediate gear set, the two axial sump walls are arranged oppositely along the axial direction of the intermediate gear set, and the length of the one axial sump wall is shorter than the length of the other axial sump wall along the circumferential direction of the intermediate gear set. This facilitates formation of the circumferential sump opening of the oil sump.

In an embodiment, a spacing between the one circumferential sump wall and the output gear is greater than a spacing between the other circumferential sump wall and the output gear, the one axial sump wall, the one circumferential sump wall, the other axial sump wall, and the other circumferential sump wall are sequentially connected to form the radial sump opening of the oil sump, and the one axial sump wall is spaced from the other circumferential sump wall to form the circumferential sump opening of the oil sump.

In this embodiment of this application, the spacing between the one circumferential sump wall and the output gear is greater than the spacing between the other circumferential sump wall and the output gear. In this case, more space is provided for the oil sump to collect lubricating oil parabolically splashed from the output gear when the output gear rotates, thereby facilitating collection of the lubricating oil. In addition, the other circumferential sump wall with a smaller axial length is closer to the output gear, so that the circumferential sump opening is formed on a side close to the output gear. The one axial sump wall, the one circumferential sump wall, the other axial sump wall, and the other circumferential sump wall are sequentially connected to form the radial sump opening of the oil sump. The radial sump opening helps the oil sump collect lubricating oil flying in from the radial direction of the intermediate gear set. The one axial sump wall is spaced from the other circumferential sump wall to form the circumferential sump opening of the oil sump. The circumferential sump opening helps the oil sump collect lubricating oil flying in from the circumferential direction of the intermediate gear set.

In this embodiment of this application, the one axial sump wall, the one circumferential sump wall, the other axial sump wall, and the other circumferential sump wall are not completely closely connected. This provides space for forming the circumferential sump opening, and enables the circumferential sump opening to be connected to the radial sump opening, to expand an area of an oil collecting opening of the oil sump and facilitate processing and manufacturing of the oil sump.

In an embodiment, the intermediate gear set includes the intermediate driven gear and an intermediate shaft, the intermediate shaft is configured to fasten the intermediate driven gear, the intermediate driven gear is configured to engage with the input gear, the output gear is configured to engage with an intermediate drive gear of the intermediate shaft, and the intermediate driven gear and the output gear have an overlapping part along the axial direction of the intermediate gear set. The one axial sump wall is stacked on intermediate gear set along the radial direction of the intermediate gear set. The other axial sump wall and the output gear are arranged on a same side of the intermediate driven gear along the axial direction of the intermediate gear set, and the other axial sump wall and the output gear are arranged at intervals along the radial direction of the intermediate gear set.

In this embodiment of this application, the intermediate driven gear in the intermediate gear set is engaged with the input gear, rotation directions of the intermediate driven gear and the input gear are opposite during rotation, and the output gear is engaged with the intermediate drive gear of the intermediate shaft, so that when the output gear rotates, rotation directions of the output gear and the intermediate driven gear are also opposite. This creates a condition for the oil sump to collect oil when the output gear rotates forward or reversely. The intermediate driven gear and the output gear have an overlapping part along the axial direction of the intermediate gear set. This is because a size of the intermediate driven gear is larger than a size of the intermediate drive gear of the intermediate shaft, and deceleration is implemented.

In this embodiment of this application, the one axial sump wall is stacked on the intermediate driven gear along the radial direction of the intermediate gear set, in other words, a part of the oil sump is placed above the intermediate driven gear, so that the circumferential sump opening formed between the one axial sump wall and the other circumferential sump wall is also located above the intermediate driven gear. This helps lead lubricating oil churned when the intermediate driven gear rotates into the oil sump from the circumferential sump opening. The other axial sump wall and the output gear are arranged on a same side of the intermediate driven gear along the axial direction of the intermediate gear set, and the other axial sump wall and the output gear are arranged at intervals along the radial direction of the intermediate gear set. This helps lead more lubricating oil churned when the output gear rotates into the oil sump, and reduce an oil churning loss caused when the oil sump cannot better collect lubricating oil churned by the output gear due to insufficient oil collecting space along the axial direction of the intermediate gear set.

In an embodiment, the shallow sump bottom and the deep sump bottom are arranged along the axial direction of the intermediate gear set. A distance between the shallow sump bottom and the radial sump opening is shorter than a distance between the deep sump bottom and the radial sump opening.

In this embodiment of this application, the shallow sump bottom and the deep sump bottom are arranged along the axial direction of the intermediate gear set, the intermediate driven gear and the output gear are arranged along the axial direction of the intermediate gear set, and the shallow sump bottom is connected to the circumferential sump opening, so that the shallow sump bottom is mainly used to collect lubricating oil churned when the intermediate driven gear rotates, and the deep sump bottom is mainly used to collect lubricating oil churned when the output gear rotates. The distance between the shallow sump bottom and the radial sump opening is shorter than the distance between the deep sump bottom and the radial sump opening. In other words, the oil sump recesses in a direction toward the intermediate gear set to form oil collecting space, and depths represented by the shallow sump bottom and the deep sump bottom are relative to the radial sump opening.

In an embodiment, along the circumferential direction of the intermediate gear set, a length of the shallow sump bottom is shorter than a length of the deep sump bottom. The shallow sump bottom is adjacent to the circumferential sump opening along the circumferential direction of the intermediate gear set. The deep sump bottom is spaced from the circumferential sump opening along the axial direction of the intermediate gear set.

In this embodiment of this application, along the circumferential direction of the intermediate gear set, the length of the shallow sump bottom is shorter than the length of the deep sump bottom. In this case, space is provided for forming the circumferential sump opening between the one axial sump wall and the other circumferential sump wall. The shallow sump bottom is adjacent to the circumferential sump opening along the circumferential direction of the intermediate gear set. This helps lubricating oil enter the oil sump from the circumferential sump opening to the shallow sump bottom when the intermediate gear set rotates and churns the lubricating oil. The deep sump bottom is spaced from the circumferential sump opening along the axial direction of the intermediate gear set, and the circumferential sump opening is also spaced from the output gear along the axial direction of the intermediate gear set. This helps arrange the deep sump bottom and the output gear along a direction perpendicular to the axial direction of the intermediate gear set, helps the oil sump collect the lubricating oil churned when the output gear rotates, and also helps the oil sump be more fitly and compactly arranged between the intermediate gear set and the output gear.

In an embodiment, along the circumferential direction of the intermediate gear set, a distance between the shallow sump bottom and the output gear is longer than a distance between the deep sump bottom and the output gear.

In this embodiment of this application, along the circumferential direction of the intermediate gear set, the distance between the shallow sump bottom and the output gear is longer than the distance between the deep sump bottom and the output gear. The distance between the deep sump bottom and the output gear is shorter, which helps the deep sump bottom collect the lubricating oil churned when the output gear rotates, and helps the lubricating oil fall into the deep sump bottom of the oil sump from the radial sump opening. In addition, because the intermediate driven gear and the output gear have an overlapping part along the axial direction of the intermediate gear set, a longer distance between the shallow sump bottom and the output gear is more conducive to arranging the shallow sump bottom above the intermediate driven gear along a direction away from the output gear, and is more conducive to arranging the circumferential sump opening along a tangent direction of the intermediate driven gear, so that the lubricating oil churned when the intermediate driven gear rotates falls into the shallow sump bottom from the circumferential sump opening.

In an embodiment, the oil sump further includes two groups of lubricating oil holes, each group of lubricating oil holes includes at least one lubricating oil hole, the at least one lubricating oil hole is arranged at intervals along the axial direction of the intermediate gear set, one group of lubricating oil holes are configured to lubricate an engagement position between the intermediate gear set and the input gear, and the other group of lubricating oil holes are configured to lubricate an engagement position between the output gear and the intermediate gear set. Along the circumferential direction of the intermediate gear set, a distance between the one group of lubricating oil holes and the output gear is longer than a distance between the other group of lubricating oil holes and the output gear. The one group of lubricating oil holes and the circumferential sump opening are arranged oppositely along the circumferential direction of the intermediate gear set. The other group of lubricating oil holes are spaced from the circumferential sump opening along the axial direction of the intermediate gear set.

In this embodiment of this application, the lubricating oil hole is configured to lead the lubricating oil collected in the oil sump to the input gear, the intermediate gear set, and the output gear for cooling and lubrication. The input gear, the intermediate gear set, and the output gear are all oblique gears. Each group of lubricating oil holes include at least one lubricating oil hole, to ensure that the lubricating oil can be better led into an engagement position between gears when the oblique gears rotate forward or reversely. The one group of lubricating oil holes are configured to lubricate the engagement position between the intermediate gear set and the input gear, so that lubricating oil led out from the one group of lubricating oil holes can cool and lubricate both the intermediate driven gear and the input gear. The other group of lubricating oil holes are configured to lubricate the engagement position between the output gear and the intermediate gear set, and this helps the other group of lubricating oil holes implement cooling and lubrication for both the output gear and the intermediate gear set.

In this embodiment of this application, along the circumferential direction of the intermediate gear set, the distance between the one group of lubricating oil holes and the output gear is longer than the distance between the other group of lubricating oil holes and the output gear. The one group of lubricating oil holes and the circumferential sump opening are arranged oppositely along the circumferential direction of the intermediate gear set. The other group of lubricating oil holes are spaced from the circumferential sump opening along the axial direction of the intermediate gear set. This helps the one group of lubricating oil holes implement cooling and lubrication for the intermediate driven gear and the input gear, and helps the other group of lubricating oil holes implement cooling and lubrication for both the output gear and the intermediate gear set.

In an embodiment, the oil sump includes a plurality of nozzles, and the nozzles are configured to convey the lubricating oil in the oil sump to a reducer housing. The plurality of nozzles are distributed on sump walls of the oil sump that are arranged along the axial direction of the intermediate gear set. Along the axial direction of the intermediate gear set, each nozzle protrudes, away from the inside of the oil sump, from a sump wall on which the nozzle is located, and an opening of each nozzle faces away from the inside of the oil sump.

In this embodiment of this application, the plurality of nozzles are distributed on the one axial sump wall and the other axial sump wall of the oil sump that are arranged along the axial direction of the intermediate gear set. This helps the nozzles spray lubricating oil along the axial direction of the intermediate gear set to lubricate the reducer housing. Along the axial direction of the intermediate gear set, each nozzle protrudes, away from the inside of the oil sump, from the sump wall on which the nozzle is located, and the opening of each nozzle faces away from the inside of the oil sump. This helps the lubricating oil in the oil sump form an impulse for spraying when the lubricating oil is led out of the oil sump from the nozzle, so that the lubricating oil can be sprayed farther, thereby facilitating cooling and lubrication of the reducer housing.

In an embodiment, the oil sump includes a plurality of fastening protrusions, and the fastening protrusions are configured to fasten the reducer housing. Each fastening protrusion extends away from the inside of the oil sump along the axial direction of the intermediate gear set. At least one fastening protrusion and at least one nozzle are arranged along the circumferential direction of the intermediate gear set, and at least one fastening protrusion and at least one nozzle are arranged along the radial direction of the intermediate gear set.

In this embodiment of this application, the fastening protrusions of the oil sump are configured to fasten the oil sump to the reducer housing, and each fastening protrusion extends away from the inside of the oil sump along the axial direction of the intermediate gear set, so that space is provided for fastening the oil sump to the reducer housing. The at least one fastening protrusion and the at least one nozzle are arranged along the circumferential direction of the intermediate gear set. This helps fasten the oil sump and the reducer housing along the circumferential direction and keep circumferential stability. The at least one fastening protrusion and the at least one nozzle are arranged along the radial direction of the intermediate gear set, so that even if the oil sump, the input gear, the intermediate gear set, and the output gear are arranged along the circumferential direction in a more compact manner, mounting space can also be provided for the oil sump along the radial direction.

In an embodiment, the reducer includes the reducer housing and a reducer end plate, space between the reducer housing and the reducer end plate is configured to accommodate the reducer and the oil sump, the reducer housing includes a housing input shaft bearing groove, a housing intermediate shaft bearing groove, a housing output shaft bearing groove, and at least one housing fastening hole, and the housing fastening hole is configured to fasten the oil sump. Along the axial direction of the intermediate gear set, the reducer end plate, the one axial sump wall, the other axial sump wall, and any housing fastening hole of the reducer housing are sequentially arranged. The bottom of the space between the reducer housing and the reducer end plate is configured to store lubricating oil, the at least one housing fastening hole is arranged on a side that is of the housing intermediate shaft bearing groove and that is away from the bottom of the space, and the at least one housing fastening hole is arranged between the housing input shaft bearing groove and the housing output shaft bearing groove.

In this embodiment of this application, the reducer housing and the reducer end plate jointly enclose a receptacle of the reducer, and the receptacle of the reducer is configured to accommodate the input gear, the intermediate gear set, the output gear, and the oil sump. The reducer housing integrates a motor housing. The integrated housing may also be referred to as an intermediate integrated housing. The intermediate integrated housing and the reducer end plate form a reducer receptacle, and the reducer receptacle is configured to accommodate the reducer. The intermediate integrated housing and a motor end plate form a motor receptacle, and the motor receptacle is configured to accommodate the motor.

In this embodiment of this application, the housing input shaft bearing groove, the housing intermediate shaft bearing groove, and the housing output shaft bearing groove are respectively configured to accommodate a housing input shaft bearing, a housing intermediate shaft bearing, and a housing output shaft bearing, inner rings of the housing input shaft bearing, the housing intermediate shaft bearing, and the housing output shaft bearing are respectively configured to fasten the input shaft, the intermediate shaft, and the output shaft of the reducer, the intermediate shaft is configured to fasten a gear of the intermediate gear set, and the output shaft is configured to fasten the output gear. The housing fastening hole of the reducer housing is configured to accommodate the fastening protrusion of the other axial sump wall of the oil sump, and the housing fastening hole and the fastening protrusion match with each other to fasten the oil sump to the reducer housing.

In this embodiment of this application, the intermediate driven gear and the output gear are arranged along the axial direction of the intermediate gear set, and the reducer end plate, the one axial sump wall, the other axial sump wall, and any housing fastening hole of the reducer housing are sequentially arranged along the axial direction of the intermediate gear set. In this case, in a process of mounting the oil sump, the shallow sump bottom connected to the one axial sump wall has a larger overlapping projection area with the projection of the intermediate driven gear along the radial direction of the intermediate gear set, so that more lubricating oil churned when the intermediate gear set rotates is collected by the oil sump. An oil storage pool is formed at the bottom of the space between the reducer housing and the reducer end plate, and the oil storage pool is configured to store lubricating oil. The lubricating oil churned when the intermediate driven gear and the output gear rotate all come from the oil storage pool.

In this embodiment of this application, the at least one housing fastening hole is arranged on the side that is of the housing intermediate shaft bearing groove and that is away from the bottom of the space, to facilitate high-position fastening of the oil sump in the reducer, and help the lubricating oil in the oil sump flow more smoothly from the two groups of lubricating oil holes and the nozzles to cool and lubricate the reducer.

In this embodiment of this application, the at least one housing fastening hole is arranged between the housing input shaft bearing groove and the housing output shaft bearing groove. This helps the oil sump lubricate both the housing input shaft bearing in the housing input shaft bearing groove and the housing output shaft bearing in the housing output shaft bearing groove.

In an embodiment, the reducer housing further includes two housing connection holes, and the two housing connection holes of the reducer housing are respectively configured to connect to the housing input shaft bearing groove and the housing output shaft bearing groove of the reducer housing. The two housing connection holes are arranged between the housing input shaft bearing groove and the housing output shaft bearing groove. The two housing connection holes are arranged between the at least one housing fastening hole and the housing intermediate shaft bearing groove.

In this embodiment of this application, the two housing connection holes are respectively a first housing connection hole and a second housing connection hole. The first housing connection hole is configured to receive lubricating oil sprayed by a nozzle, to lubricate the housing input shaft bearing groove. The lubricating oil sprayed by the nozzle is directly sprayed to the first housing connection hole. The second housing connection hole is configured to receive lubricating oil sprayed by a nozzle, to lubricate the housing output shaft bearing groove. The lubricating oil sprayed by the nozzle is sprayed onto an inner wall of the reducer housing, and is led into the second housing connection hole through a reducer housing flow boss. The two housing connection holes are arranged between the housing input shaft bearing groove and the housing output shaft bearing groove, so that the lubricating oil flows through the two housing connection holes in a shorter path, to lubricate the housing input shaft bearing groove and the housing output shaft bearing groove more quickly. The two housing connection holes are arranged between a housing fastening hole and the housing intermediate shaft bearing groove, to facilitate opening of the housing connection holes on the reducer housing.

In an embodiment, the reducer housing further includes an oil outlet hole, the oil outlet hole is configured to connect to an oil pump through an internal oil passage of the reducer housing, and the oil outlet hole is configured to spray oil into the oil sump through an oil spray nozzle. The oil outlet hole is arranged between the housing input shaft bearing groove and the housing output shaft bearing groove. Along a radial direction of an output shaft, the oil outlet hole is arranged between the at least one housing fastening hole and the housing output shaft bearing groove. Along the radial direction of the intermediate gear set, the two housing connection holes are arranged between the oil outlet hole and the housing intermediate shaft bearing groove.

In this embodiment of this application, the oil outlet hole is configured to connect to the oil pump through the internal oil passage of the reducer housing, and the oil outlet hole is configured to spray oil into the oil sump through the oil spray nozzle. When rotation speeds of the intermediate driven gear and the output gear of the reducer are insufficient to churn the lubricating oil in the oil storage pool into the oil sump, and the lubricating oil in the oil sump is insufficient to cool and lubricate the input gear, the intermediate gear set, the output gear, and the like in the reducer, the reducer needs to output lubricating oil from the oil outlet hole to add oil to the oil sump. That is, disposing of the oil outlet hole can ensure that the reducer can implement cooling and lubrication in time in any running working status. The oil outlet hole is arranged between the housing input shaft bearing groove and the housing output shaft bearing groove. This facilitates a layout of the internal oil passage of the reducer housing, and helps the lubricating oil in the oil outlet hole be smoothly led into the oil sump. The two housing connection holes are arranged between the oil outlet hole and the housing intermediate shaft bearing groove along the radial direction of the intermediate gear set, in other words, the oil outlet hole is relatively arranged at a position of the oil sump away from the intermediate gear set along the radial direction of the intermediate gear set. This helps the lubricating oil in the oil outlet hole fall into the oil sump along a gravity direction, to reduce a power loss.

In an embodiment, the reducer end plate includes an end plate input shaft bearing groove, an end plate intermediate shaft bearing groove, and at least one end plate fastening hole, and the end plate fastening hole is used to fasten the oil sump. The at least one end plate fastening hole is arranged on a side that is of the end plate intermediate shaft bearing groove and that is away from the bottom of the space. Along the radial direction of the intermediate gear set, a distance between each end plate fastening hole and a shaft center of the intermediate shaft is longer than a radius of the intermediate gear set.

In this embodiment of this application, the end plate input shaft bearing groove and the end plate intermediate shaft bearing groove are respectively configured to accommodate an end plate input shaft bearing and an end plate intermediate shaft bearing, an inner ring of the end plate input shaft bearing and an inner ring of the end plate intermediate shaft bearing are respectively configured to fasten the input shaft and the intermediate shaft, and the end plate fastening hole of the reducer end plate matches with the fastening protrusion located on the one axial sump wall of the oil sump to fasten the oil sump to the reducer end plate. The at least one end plate fastening hole is arranged on a side that is of the end plate intermediate shaft bearing groove and that is away from the oil storage pool, to facilitate high-position fastening of the oil sump in the reducer, and help the lubricating oil in the oil sump flow more smoothly from the two groups of lubricating oil holes and the nozzles to cool and lubricate the reducer.

In this embodiment of this application, along the radial direction of the intermediate gear set, a distance between each end plate fastening hole and the shaft center of the intermediate shaft is longer than the radius of the intermediate gear. This facilitates disposing of an end plate fastening hole on the reducer end plate while bypassing the intermediate gear set, facilitates secure mounting of the oil sump above the intermediate gear set, and helps the lubricating oil in the oil storage pool churned by the intermediate driven gear be led into the oil sump more smoothly.

According to a second aspect, this application provides an electric vehicle. The electric vehicle includes a vehicle body, a motor, and the reducer according to any one of the foregoing descriptions, the vehicle body is configured to fasten the motor and the reducer, and a motor shaft of the motor is configured to be in transmission connection to an input shaft of the reducer.

In an embodiment of this application, the motor includes a motor shaft, a stator, and a rotor, the reducer includes a gear assembly, an input shaft, and an output shaft, and the input shaft receives power transmitted by the motor shaft of the motor and transmits the power to the output shaft via the gear assembly. The gear assembly may be set based on a requirement, and may be a single-grade deceleration gear assembly or a two-grade or multi-grade deceleration gear assembly. The rotor is securely sleeved on the motor shaft, and the stator drives the rotor to rotate after receiving an alternating current, thereby driving the motor shaft to rotate. The motor shaft of the motor is in transmission connection with the input shaft of the reducer. The reducer is in transmission connection with wheels. The reducer is configured to transmit power to the wheels to drive the wheels to rotate.

The reducer provided in this application includes a two-way oil sump. A radial sump opening and a circumferential sump opening are formed at the oil sump, so that the oil sump can collect lubricating oil churned by a gear train when an input gear drives, via an intermediate gear set, an output gear to rotate forward or reversely, to increase an amount of lubricating oil collected by the oil sump, reduce an oil churning loss of the gear train, improve efficiency of the reducer, and further improve overall performance of the electric vehicle.

### BRIEF DESCRIPTION OF DRAWINGS

FIG. 1 is a diagram of a structure of an electric vehicle according to an embodiment of this application;
FIG. 2 is a diagram of a structure of a powertrain according to an embodiment of this application;
FIG. 3 is a diagram of a structure of an oil sump according to an embodiment of this application;
FIG. 4 is a diagram of a structure of a reducer according to an embodiment of this application;
FIG. 5 is a diagram of a structure of a reducer according to an embodiment of this application;
FIG. 6 is a partial enlarged diagram of an M1 part in FIG. 4;
FIG. 7 is a diagram of a structure of a reducer according to an embodiment of this application;
FIG. 8 is a diagram of a structure of a reducer according to an embodiment of this application;
FIG. 9 is a diagram of a structure of a reducer according to an embodiment of this application;
FIG. 10 is a diagram of a structure of a reducer according to an embodiment of this application;
FIG. 11 is a diagram of a structure of an oil sump according to an embodiment of this application;
FIG. 12 is a diagram of a structure of a reducer according to an embodiment of this application;
FIG. 13 is a diagram of a structure of an oil sump according to an embodiment of this application;
FIG. 14 is a diagram of a structure of an oil sump according to an embodiment of this application;
FIG. 15 is a diagram of a structure of an oil sump according to an embodiment of this application;
FIG. 16 is a diagram of a structure of a reducer housing according to an embodiment of this application; and
FIG. 17 is a diagram of a structure of a reducer end plate according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

In addition, in this specification, position terms such as "top" and "bottom" are defined relative to positions of structures in the accompanying drawings. It should be understood that these position terms are relative concepts used for relative description and clarification, and may correspondingly change according to changes in the positions of the structures.

For ease of understanding, the following first explains and describes related technical terms in embodiments of this application.

Parallelism: Parallelism defined in embodiments of this application is not limited to absolute parallelism. A definition of the parallelism may be understood as basic parallelism, and a case in which non-absolute parallelism is caused by factors such as an assembly tolerance, a design tolerance, and a structural flatness is allowed.

Verticality: Verticality defined in embodiments of this application is not limited to an absolute vertical intersection (an included angle is 90 degrees) relationship, a non-absolute vertical intersection relationship caused by factors such as an assembly tolerance, a design tolerance, and a structural flatness is allowed, and an error within a small angle range is allowed. For example, a relationship within an assembly error range of 80 degrees to 100 degrees may be understood as the vertical relationship.

To improve an oil collecting effect of an oil sump on lubricating oil and reduce an oil churning loss of a gear, this application provides a two-way oil-collecting reducer. The reducer includes an input gear, an intermediate gear set, an output gear, and an oil sump. The input gear is configured to drive, via the intermediate gear set, the output gear to rotate forward or reversely, a rotation direction of the intermediate gear set is opposite to a rotation direction of the output gear, and the oil sump includes a radial sump opening and a circumferential sump opening. An orientation of the radial sump opening is away from the intermediate gear set along a radial direction of the intermediate gear set. An orientation of the circumferential sump opening faces the output gear along a circumferential direction of the intermediate gear set. The radial sump opening is connected to the circumferential sump opening. In embodiments of this application, the radial sump opening and the circumferential sump opening are formed at the oil sump, so that the oil sump can collect lubricating oil churned by a gear train when the input gear drives, via the intermediate gear set, the output gear to rotate forward or reversely, to increase an amount of lubricating oil collected by the oil sump, reduce an oil churning loss of the gear train, and improve efficiency of the reducer.

The reducer provided in embodiments of this application can be used in a powertrain, and the powertrain including the reducer in embodiments of this application can be used in an electric vehicle.

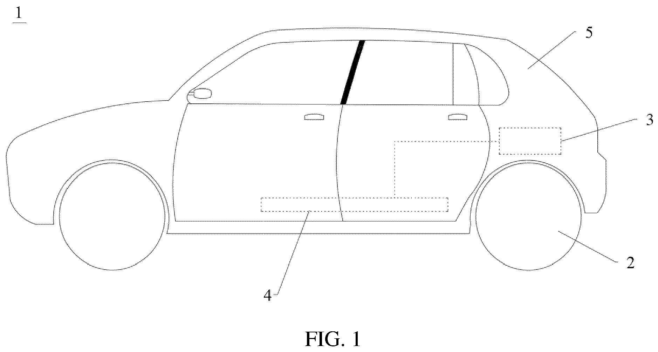

FIG. 1 is a diagram of a structure of an electric vehicle 1 according to an embodiment of this application. In this embodiment of this application, the electric vehicle 1 includes a powertrain 3, a vehicle body 5, a battery pack 4, and wheels 2. The powertrain 3 and the battery pack 4 are fastened to the vehicle body 5. The powertrain 3 is configured to receive power supplied by the battery pack 4, and is configured to drive the wheels 2.

In this embodiment of this application, the electric vehicle 1 is a wheeled device driven or pulled by a power apparatus.

In this embodiment of this application, the battery pack 4 may also be referred to as a power battery.

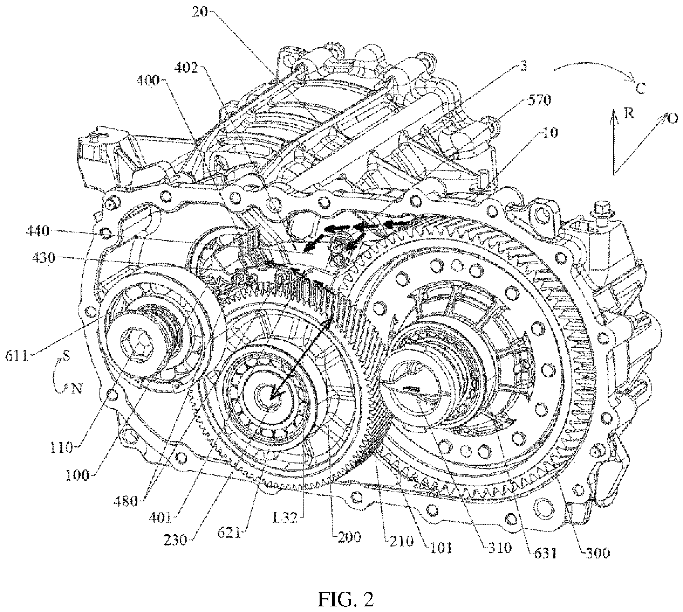

Refer to FIG. 1 and FIG. 2. FIG. 2 is a diagram of a structure of the powertrain 3 according to an embodiment of this application. In an embodiment, the powertrain 3 includes a motor 20 and a reducer 10, the motor 20 includes a motor shaft (not shown in the figure), a stator (not shown in the figure), and a rotor (not shown in the figure), and the reducer 10 includes a gear assembly (not shown in the figure), an input shaft 110, and an output shaft 310. The input shaft 110 receives power transmitted by the motor shaft of the motor 20 and transmits the power to the output shaft 310 via the gear assembly. The gear assembly may be set based on a requirement, and may be a single-grade deceleration gear assembly or a two-grade or multi-grade deceleration gear assembly. The rotor is securely sleeved on the motor shaft, and the stator drives the rotor to rotate after receiving an alternating current, thereby driving the motor shaft to rotate. The motor shaft of the motor 20 is in transmission connection with the input shaft 110 of the reducer 10.

In this embodiment of this application, the motor 20 and the reducer 10 are arranged along an axial direction O of the motor, and the motor shaft of the motor 20 is fastened to the input shaft 110 of the reducer 10.

In an embodiment, the powertrain 3 further includes a motor controller (not shown in the figure). The motor controller is fastened to the vehicle body 5. The motor controller is configured to: receive a direct current transmitted by the battery pack 4, convert the direct current into an alternating current, and transmit the alternating current to the motor 20. The motor 20 is in transmission connection with the reducer 10. The motor 20 is configured to: after receiving an alternating current, convert electric energy into mechanical energy, and transmit the mechanical energy to the reducer 10. The reducer 10 is in transmission connection with the wheels 2. The reducer 10 is configured to transmit power to the wheels 2 to drive the wheels 2 to rotate.

The following describes in detail the reducer 10 provided in embodiments of this application.

Still refer to FIG. 2. Embodiments of this application provide a two-way oil-collecting reducer 10. The reducer 10 includes an input gear 100, an intermediate gear set 200, an output gear 300, and an oil sump 400. The input shaft 110 is configured to drive, via the intermediate gear set 200, the output gear 300 to rotate forward or reversely, a rotation direction of the intermediate gear set 200 is opposite to a rotation direction of the output gear 300, and the oil sump 400 includes a radial sump opening 402 and a circumferential sump opening 401. An orientation of the radial sump opening 402 is away from the intermediate gear set 200 along a radial direction R of the intermediate gear set. An orientation of the circumferential sump opening 401 faces the output gear 300 along a circumferential direction C of the intermediate gear set. The radial sump opening 402 is connected to the circumferential sump opening 401.

In embodiments of this application, the input gear 100 is fastened to the input shaft 110 of the reducer 10, and the input shaft 110 of the reducer is configured to receive mechanical energy transmitted by the motor shaft of the motor 20, to drive the input gear 100 to rotate. The input gear 100 is engaged with some gears of the intermediate gear set 200 to rotate, and rotation directions of the input gear 100 and the intermediate gear set 200 are opposite. Some gears of the intermediate gear set 200 are engaged with the output gear 300, so that rotation directions of the intermediate gear set 200 and the output gear 300 are opposite. In embodiments of this application, the intermediate gear set 200 includes an intermediate shaft 230, an intermediate driven gear 210, and an intermediate drive gear (not shown in the figure). Both the intermediate driven gear 210 and the intermediate drive gear are fastened to the intermediate shaft 230, the intermediate driven gear 210 is engaged with the input gear 100 to receive power transmitted by the input gear 100, and the intermediate drive gear is engaged with the output gear 300 to transmit power to the output gear 300.

Still refer to FIG. 2. In an embodiment, a radius of the output gear 300 is greater than a radius of the intermediate driven gear 210, and the radius of the intermediate driven gear 210 is greater than a radius of the intermediate drive gear, so that a rotational speed output by the output gear 300 is less than a rotational speed input by the input gear 100, to reduce the power output by the motor shaft.

In this embodiment of this application, the radial sump opening 402 of the oil sump 400 is away from the intermediate gear set 200 along the radial direction R of the intermediate gear set, so that an opening direction of the radial sump opening 402 faces upward when the radial sump opening 402 is placed in the reducer 10. Generally, a radius of the output gear 300 is large. When the output gear 300 rotates and churns oil, a tooth part of the output gear 300 at a high position can throw the lubricating oil from the high position into the radial sump opening 402 and then into the oil sump 400. In an embodiment, when the motor 20 rotates reversely, as shown in FIG. 2, that the motor 20 rotates reversely means that the motor shaft of the motor 20 rotates along a counterclockwise direction N, the output gear 300 is driven to rotate along the counterclockwise direction N, the output gear 300 rotates toward the oil sump 400, and the oil sump 400 collects, via the radial sump opening 402, the lubricating oil led by the output gear 300 by churning the oil, as shown in a lubricating oil movement route represented by thick arrows in FIG. 2. It should be noted that, in FIG. 2, the motor 20 rotates reversely along the counterclockwise direction N, and when viewed from a rear perspective of FIG. 2, the motor 20 rotates reversely along a clockwise direction S.

In this embodiment of this application, the circumferential sump opening 401 of the oil sump 400 faces the output gear 300 along the circumferential direction C of the intermediate gear set, so that the circumferential sump opening 401 of the oil sump 400 can collect lubricating oil thrown along the circumferential direction C of the intermediate gear set. In an embodiment, because the radius of the intermediate driven gear 210 of the intermediate gear set 200 is small, the lubricating oil cannot be thrown into the oil sump 400 from a high position. The circumferential sump opening 401 is formed at the oil sump 400, and the circumferential sump opening 401 can collect lubricating oil thrown from a low position along the circumferential direction C of the intermediate gear set, and can further collect lubricating oil thrown from a position of the output gear 300. In an embodiment, when the motor 20 rotates forward, as shown in FIG. 2, that the motor 20 rotates forward means that the motor shaft of the motor 20 rotates along a clockwise direction S, the intermediate gear set 200 is driven to rotate along the counterclockwise direction N, and the intermediate gear set 200 rotates toward the circumferential sump opening 401, to collect lubricating oil thrown when the intermediate gear set 200 rotates along the counterclockwise direction N, as shown in a lubricating oil movement route represented by thin arrows in FIG. 2.

In this embodiment of this application, the radial sump opening 402 is connected to the circumferential sump opening 401, so that an area of an oil collecting opening of the oil sump 400 is larger, and more lubricating oil can be collected. The radial sump opening 402 is connected to the circumferential sump opening 401. This facilitates processing and manufacturing of the oil sump 400.

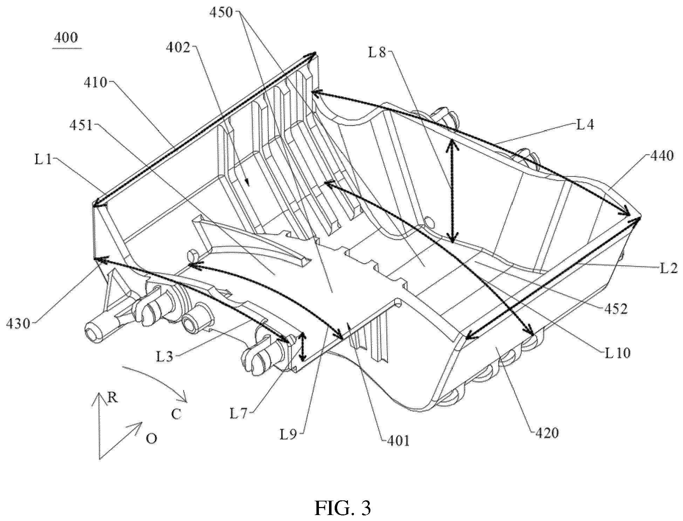

Refer to FIG. 2 and FIG. 3. FIG. 3 is a diagram of a structure of the oil sump 400 according to an embodiment of this application. In an embodiment, the oil sump 400 includes two circumferential sump walls 410 and 420 and two axial sump walls 430 and 440. The two circumferential sump walls 410 and 420 are arranged oppositely along the circumferential direction C of the intermediate gear set, and a length of the circumferential sump wall 410 is longer than a length of the circumferential sump wall 420 along the axial direction O of the intermediate gear set. The two axial sump walls 430 and 440 are arranged oppositely along the axial direction O of the intermediate gear set, and a length of the axial sump wall 430 is shorter than a length of the axial sump wall 440 along the circumferential direction C of the intermediate gear set.

As shown in FIG. 3, in this embodiment of this application, the two circumferential sump walls 410 and 420 and the two axial sump walls 430 and 440 of the oil sump 400 are configured to provide storage space for lubricating oil collected by the oil sump 400. Along the axial direction O of the intermediate gear set, the length of the circumferential sump wall 410 is denoted as L1, and the length of the circumferential sump wall 420 is denoted as L2, where L1>L2. When the circumferential sump wall 410 is larger, this helps better prevent the lubricating oil churned when the intermediate gear set 200 or the output gear 300 rotates from flying out of the oil sump 400, thereby reducing an oil churning loss. The circumferential sump wall 420 is smaller, which helps form the circumferential sump opening 401, further helps reduce a volume of the oil sump 400 and reduce mounting space occupied by the oil sump 400 in the reducer 10, and helps the lubricating oil churned when the output gear 300 rotates fly into the oil sump 400. Along the circumferential direction C of the intermediate gear set, the length of the axial sump wall 430 is denoted as L3, and the length of the axial sump wall 440 is denoted as L4. When L1>L2 and L3<L4, this helps form the circumferential sump opening 401 of the oil sump 400. The axial direction O of the intermediate gear set is the same as the axial direction O of the motor.

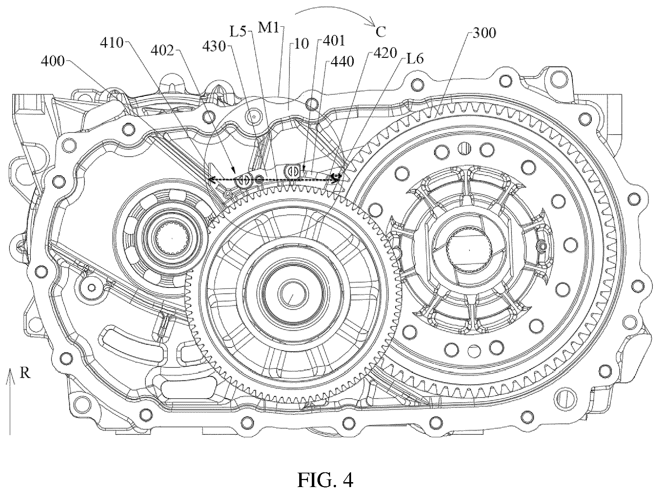

Refer to FIG. 3 and FIG. 4. FIG. 4 is a diagram of a structure of the reducer 10 according to an embodiment of this application. In an embodiment, a spacing between the circumferential sump wall 410 and the output gear 300 is greater than a spacing between the circumferential sump wall 420 and the output gear 300, the axial sump wall 430, the circumferential sump wall 410, the axial sump wall 440, and the circumferential sump wall 420 are sequentially connected to form the radial sump opening 402 of the oil sump 400 (as shown in FIG. 3), and the axial sump wall 430 is spaced from the circumferential sump wall 420 to form the circumferential sump opening 401 of the oil sump 400 (as shown in FIG. 3).

In this embodiment of this application, the spacing between the circumferential sump wall 410 and the output gear 300 is denoted as L5, and the spacing between the circumferential sump wall 420 and the output gear 300 is denoted as L6, where L5>L6. In this case, more space is provided for the oil sump 400 to collect lubricating oil parabolically splashed from the output gear 300 when the output gear 300 rotates, thereby facilitating collection of the lubricating oil. In addition, the circumferential sump wall 420 with a smaller axial length is closer to the output gear 300, so that the circumferential sump opening 401 is formed on a side close to the output gear 300. The axial sump wall 430, the circumferential sump wall 410, the axial sump wall 440, and the circumferential sump wall 420 are sequentially connected to form the radial sump opening 402 of the oil sump 400. The radial sump opening 402 helps the oil sump 400 collect lubricating oil flying in from the radial direction R of the intermediate gear set. The axial sump wall 430 is spaced from the circumferential sump wall 420 to form the circumferential sump opening 401 of the oil sump 400. The circumferential sump opening 401 helps the oil sump 400 collect lubricating oil flying in from the circumferential direction C of the intermediate gear set. In this embodiment of this application, the axial sump wall 430, the circumferential sump wall 410, the axial sump wall 440, and the circumferential sump wall 420 are not completely closely connected. This provides space for forming the circumferential sump opening 401, and enables the circumferential sump opening 401 to be connected to the radial sump opening 402, to expand an area of an oil collecting opening of the oil sump 400 and facilitate processing and manufacturing of the oil sump 400.

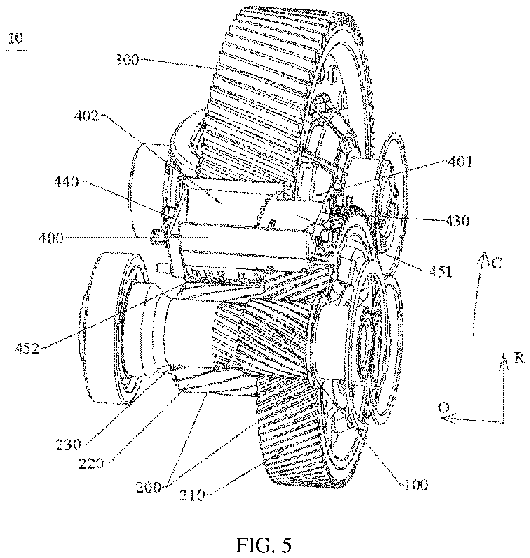

Refer to FIG. 2 and FIG. 5. FIG. 5 is a diagram of a structure of the reducer 10 according to an embodiment of this application. In an embodiment, the intermediate gear set 200 includes the intermediate driven gear 210 and the intermediate shaft 230 (as shown in FIG. 5), the intermediate shaft 230 is configured to fasten the intermediate driven gear 210, the intermediate driven gear 210 is configured to engage with the input gear 100, the output gear 300 is configured to engage with the intermediate drive gear 220 of the intermediate shaft 230, and the intermediate driven gear 210 and the output gear 300 have an overlapping part along the axial direction O of the intermediate gear set (as shown in FIG. 2). The axial sump wall 430 is stacked on the intermediate driven gear 210 along the radial direction R of the intermediate gear set (as shown in FIG. 2). The axial sump wall 440 and the output gear 300 are arranged on a same side of the intermediate driven gear 210 along the axial direction O of the intermediate gear set, and the axial sump wall 440 and the output gear 300 are arranged at intervals along the radial direction R of the intermediate gear set.

As shown in FIG. 5, in this embodiment of this application, the intermediate driven gear 210 in the intermediate gear set 200 is engaged with the input gear 100, rotation directions of the intermediate driven gear 210 and the input gear 100 are opposite during rotation, and the output gear 300 is engaged with the intermediate drive gear 220 of the intermediate shaft 230, so that when the output gear 300 rotates, rotation directions of the output gear 300 and the intermediate driven gear 210 are also opposite. This creates a condition for the oil sump 400 to collect oil when the output gear 300 rotates forward or reversely. The intermediate driven gear 210 and the output gear 300 have an overlapping part along the axial direction O of the intermediate gear set. This is because a size of the intermediate driven gear 210 is larger than a size of the intermediate drive gear 220 of the intermediate shaft 230, and deceleration is implemented.

In this embodiment of this application, the axial sump wall 430 is stacked on the intermediate driven gear 210 along the radial direction R of the intermediate gear set, in other words, a part of the oil sump 400 is placed above the intermediate driven gear 210, so that the circumferential sump opening 401 formed between the axial sump wall 430 and the circumferential sump wall 420 is also located above the intermediate driven gear 210. This helps lead lubricating oil churned when the intermediate driven gear 210 rotates into the oil sump 400 from the circumferential sump opening 401. The axial sump wall 440 and the output gear 300 are arranged on a same side of the intermediate driven gear 210 along the axial direction O of the intermediate gear set, and the axial sump wall 440 and the output gear 300 are arranged at intervals along the radial direction R of the intermediate gear set. This helps lead more lubricating oil churned when the output gear 300 rotates into the oil sump 400, and reduce an oil churning loss caused when the oil sump 400 cannot better collect lubricating oil churned by the output gear 300 due to insufficient oil collecting space along the axial direction O of the intermediate gear set.

Refer to FIG. 3 and FIG. 5. In an embodiment, the oil sump 400 further includes a sump bottom 450 (as shown in FIG. 3), and the sump bottom 450 includes a shallow sump bottom 451 and a deep sump bottom 452. The shallow sump bottom 451 and the deep sump bottom 452 are arranged along the axial direction O of the intermediate gear set. A distance between the shallow sump bottom 451 and the radial sump opening 402 is shorter than a distance between the deep sump bottom 452 and the radial sump opening 402.

In this embodiment of this application, the shallow sump bottom 451 and the deep sump bottom 452 are arranged along the axial direction O of the intermediate gear set, the intermediate driven gear 210 and the output gear 300 are arranged along the axial direction O of the intermediate gear set, and the shallow sump bottom 451 is connected to the circumferential sump opening 401, so that the shallow sump bottom 451 is mainly used to collect lubricating oil churned when the intermediate driven gear 210 rotates, and the deep sump bottom 452 is mainly used to collect lubricating oil churned when the output gear 300 rotates. A distance between the shallow sump bottom 451 and the radial sump opening 402 is denoted as L7, and a distance between the deep sump bottom 452 and the radial sump opening 402 is denoted as L8, where L7<L8. In other words, the oil sump 400 recesses in a direction toward the intermediate gear set 200 to form oil collecting space, and depths represented by the shallow sump bottom 451 and the deep sump bottom 452 are relative to the radial sump opening 402.

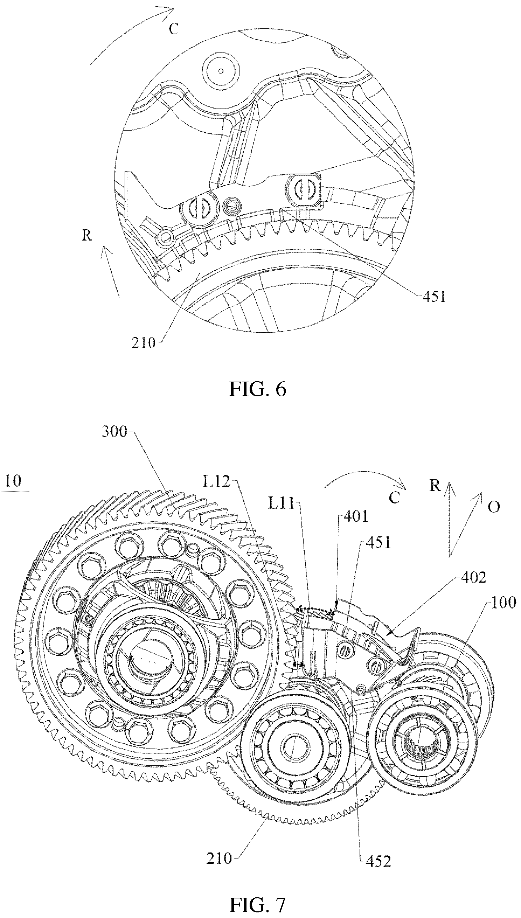

Refer to FIG. 5 and FIG. 6. FIG. 6 is a partial enlarged diagram of an M1 part in FIG. 4. In an embodiment, a projection of the shallow sump bottom 451 overlaps with a part of a projection of the intermediate driven gear 210 along the radial direction R of the intermediate gear set. An outer circumferential surface of an overlapping part of the projection of the intermediate driven gear 210 and the projection of the shallow sump bottom 451 is parallel to the shallow sump bottom 451 along a circumferential direction C of the intermediate shaft (as shown in FIG. 6).

In this embodiment of this application, that a projection of the shallow sump bottom 451 overlaps with a part of a projection of the intermediate driven gear 210 along the radial direction R of the intermediate gear set means that the shallow sump bottom 451 is placed above the intermediate driven gear 210, and that an outer circumferential surface of an overlapping part of the projection of the intermediate driven gear 210 and the projection of the shallow sump bottom 451 is parallel to the shallow sump bottom 451 along a circumferential direction C of the intermediate shaft 230 means that the shallow sump bottom 451 and the intermediate driven gear 210 are arranged in a structure similar to a concentric arc. This helps the shallow sump bottom 451 be more fitted and attached to the intermediate driven gear 210, and be more consistent with an oil throwing route when the intermediate driven gear 210 rotates, thereby helping the oil sump 400 collect, from the circumferential sump opening 401, the lubricating oil churned when the intermediate driven gear 210 rotates. The circumferential direction C of the intermediate shaft 230 is the same as the circumferential direction C of the intermediate gear set.

Refer to FIG. 3 and FIG. 5. In an embodiment, along the circumferential direction C of the intermediate gear set, a length of the shallow sump bottom 451 is shorter than a length of the deep sump bottom 452. The shallow sump bottom 451 is adjacent to the circumferential sump opening 401 along the circumferential direction C of the intermediate gear set. The deep sump bottom 452 is spaced from the circumferential sump opening 401 along the axial direction O of the intermediate gear set.

In this embodiment of this application, as shown in FIG. 3, along the circumferential direction C of the intermediate gear set, the length of the shallow sump bottom 451 is denoted as L9, and the length of the deep sump bottom 452 is denoted as L10, where L9<L10. In this case, space is provided for forming the circumferential sump opening 401 between the axial sump wall 430 and the circumferential sump wall 420. The shallow sump bottom 451 is adjacent to the circumferential sump opening 401 along the circumferential direction C of the intermediate gear set. This helps lubricating oil enter the oil sump 400 from the circumferential sump opening 401 to the shallow sump bottom 451 when the intermediate gear set 200 rotates and churns the lubricating oil. The deep sump bottom 452 is spaced from the circumferential sump opening 401 along the axial direction O of the intermediate gear set. The circumferential sump opening 401 is also spaced from the output gear 300 along the axial direction O of the intermediate gear set. This helps arrange the deep sump bottom 452 and the output gear 300 along a direction perpendicular to the axial direction O of the intermediate gear set, helps the oil sump 400 collect the lubricating oil churned when the output gear 300 rotates, and also helps the oil sump 400 be more fitly and compactly arranged between the intermediate gear set 200 and the output gear 300.

FIG. 7 is a diagram of a structure of the reducer 10 according to an embodiment of this application. In an embodiment, along the circumferential direction C of the intermediate gear set, a distance between the shallow sump bottom 451 and the output gear 300 is longer than a distance between the deep sump bottom 452 and the output gear 300.

In this embodiment of this application, along the circumferential direction C of the intermediate gear set, the distance between the shallow sump bottom 451 and the output gear 300 is denoted as L11, and the distance between the deep sump bottom 452 and the output gear 300 is denoted as L12, where L11>L12. The distance between the deep sump bottom 452 and the output gear 300 is shorter, which helps the deep sump bottom 452 collect the lubricating oil churned when the output gear 300 rotates, and helps the lubricating oil fall into the deep sump bottom 452 of the oil sump 400 from the radial sump opening 402. In addition, because the intermediate driven gear 210 and the output gear 300 have an overlapping part along the axial direction O of the intermediate gear set, a longer distance between the shallow sump bottom 451 and the output gear 300 is more conducive to arranging the shallow sump bottom 451 above the intermediate driven gear 210 along a direction away from the output gear 300, and is more conducive to arranging the circumferential sump opening 401 along a tangent direction of the intermediate driven gear 210, so that the lubricating oil churned when the intermediate driven gear 210 rotates falls into the shallow sump bottom 451 from the circumferential sump opening 401.

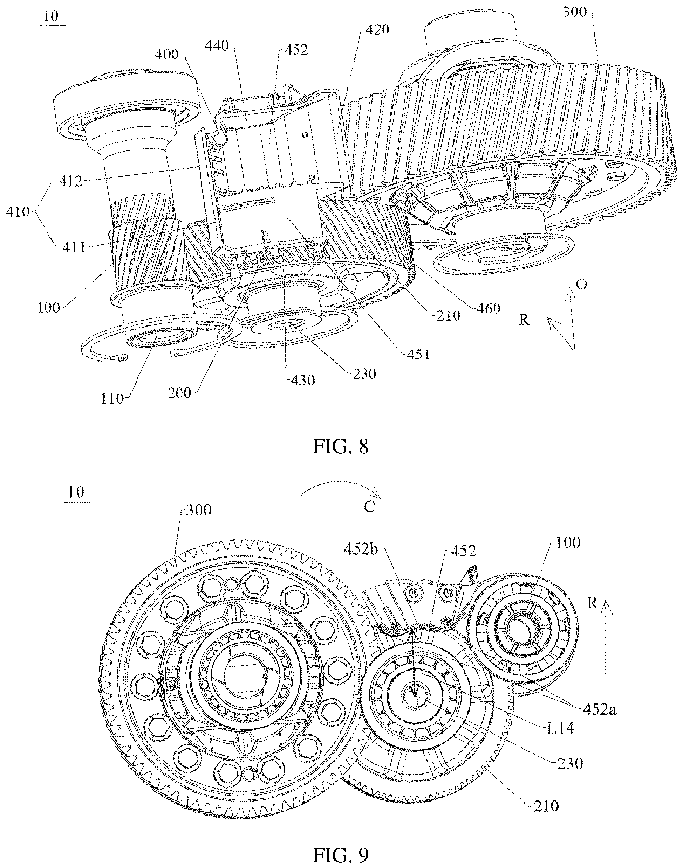

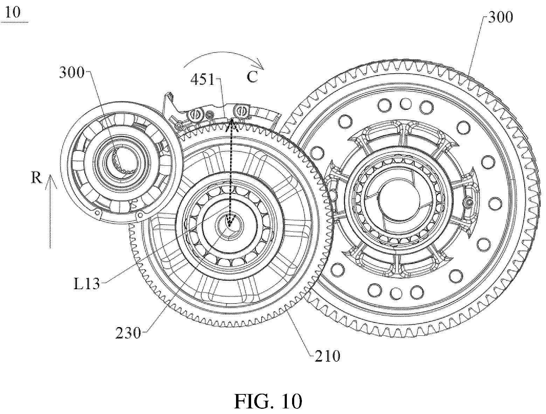

Refer to FIG. 8, FIG. 9, and FIG. 10. FIG. 8 is a diagram of a structure of the reducer 10 according to an embodiment of this application, FIG. 9 is a diagram of a structure of the reducer 10 according to an embodiment of this application, and FIG. 10 is a diagram of a structure of the reducer 10 according to an embodiment of this application. In an embodiment, the oil sump 400 further includes a connecting axial sump wall 460 (as shown in FIG. 8), the shallow sump bottom 451, the connecting axial sump wall 460, and the deep sump bottom 452 are sequentially arranged along the axial direction O of the intermediate gear set, the shallow sump bottom 451 is configured to connect to one part 411 of the circumferential sump wall 410 and the axial sump wall 430, and the deep sump bottom 452 is configured to connect to the other part 412 of the circumferential sump wall 410, the axial sump wall 440, and the circumferential sump wall 420. Along the radial direction R of the intermediate gear set, the shallow sump bottom 451 is stacked on the intermediate driven gear 210, the deep sump bottom 452 is stacked on another gear engaged with the output gear 300, and a spacing between the shallow sump bottom 451 and the intermediate shaft 230 is greater than a spacing between the deep sump bottom 452 and the intermediate shaft 230. Along the axial direction O of the intermediate gear set, the intermediate driven gear 210, the connecting axial sump wall 460, and the deep sump bottom 452 are sequentially arranged, the axial sump wall 430, the connecting axial sump wall 460, and the axial sump wall 440 are sequentially arranged at intervals, and the circumferential sump wall 420 is connected between the connecting axial sump wall 460 and the axial sump wall 440.

In this embodiment of this application, the connecting axial sump wall 460 helps form large oil collecting space at the deep sump bottom 452 of the oil sump 400 for storage of the lubricating oil. One part of an oil collecting region of the oil sump 400 is formed between the shallow sump bottom 451, the one part 411 of the circumferential sump wall 410, and the axial sump wall 430, and the other part of the oil collecting region of the oil sump 400 is formed between the deep sump bottom 452, the other part 412 of the circumferential sump wall 410, the axial sump wall 440, the circumferential sump wall 420, and the connecting axial sump wall 460. Along the radial direction R of the intermediate gear set, the shallow sump bottom 451 is stacked on the intermediate driven gear 210, and the deep sump bottom 452 is stacked on the another gear engaged with the output gear 300. The spacing between the shallow sump bottom 451 and the intermediate shaft 230 is denoted as L13 (as shown in FIG. 10), and the spacing between the deep sump bottom 452 and the intermediate shaft 230 is denoted as L14 (as shown in FIG. 9), where L13>L14. This helps reduce space occupation of the oil sump 400 arranged in the reducer 10 along an axial direction O of the intermediate shaft and along a direction perpendicular to the axial direction O of the intermediate shaft. Along the axial direction O of the intermediate gear set, a projection of the intermediate driven gear 210 partially overlaps with a projection of the connecting axial sump wall 460. Along the axial direction O of the intermediate gear set, the intermediate driven gear 210, the connecting axial sump wall 460, and the deep sump bottom 452 are sequentially arranged, the axial sump wall 430, the connecting axial sump wall 460, and the axial sump wall 440 are sequentially arranged at intervals, and the circumferential sump wall 420 is connected between the connecting axial sump wall 460 and the axial sump wall 440. This helps form oil collecting space along a direction perpendicular to the intermediate shaft 230 at the deep sump bottom 452 of the oil sump 400, so that the lubricating oil churned when the output gear 300 rotates falls into the oil sump 400.

Still refer to FIG. 8. In an embodiment, the connecting axial sump wall 460 is perpendicular to the shallow sump bottom 451 and the deep sump bottom 452. In this embodiment of this application, the connecting axial sump wall 460 is connected to the deep sump bottom 452 and the shallow sump bottom 451, and the connecting axial sump wall 460 is perpendicular to the axial direction O of the intermediate gear set. This facilitates more fit and compact arrangement of the oil sump 400 and the intermediate gear set 200, and facilitates processing and manufacturing of the oil sump 400.

Still refer to FIG. 8. In an embodiment, the oil sump 400 is arranged between the input shaft 110 and the output gear 300. Space between the input shaft 110 and the output gear 300 is fully utilized to reduce a volume of the reducer 10.

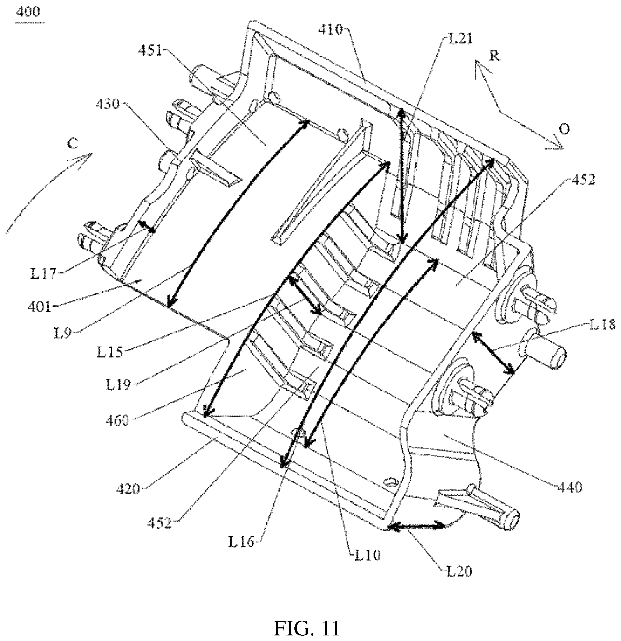

FIG. 11 is a diagram of a structure of the oil sump 400 according to an embodiment of this application. In an embodiment, along the circumferential direction C of the intermediate gear set, the length of the shallow sump bottom 451 is shorter than the length of the deep sump bottom 452 and a length of the connecting axial sump wall 460. The shallow sump bottom 451 is flush with an end face that is of the axial sump wall 430 and that is away from the circumferential sump wall 410, and a part of the deep sump bottom 452 and a part of the connecting axial sump wall 460 protrude, away from the circumferential sump wall 410, from an end face that is of the shallow sump bottom 451 and that is away from the circumferential sump wall 410. A distance between the circumferential sump wall 420 and the circumferential sump wall 410 is longer than the length of the shallow sump bottom 451.

In this embodiment of this application, along the circumferential direction C of the intermediate gear set, the length of the shallow sump bottom 451 is L9, the length of the deep sump bottom 452 is L10, and the length of the connecting axial sump wall 460 is denoted as L15, where L9<L15, L10<L15, and L9<L10. The shallow sump bottom 451 is flush with the end face that is of the axial sump wall 430 and that is away from the circumferential sump wall 410, and the part of the deep sump bottom 452 and the part of the connecting axial sump wall 460 protrude, away from the circumferential sump wall 410, from the end face that is of the shallow sump bottom 451 and that is away from the circumferential sump wall 410. This helps form large oil collecting space along the circumferential direction C of the intermediate gear set at the deep sump bottom 452 of the oil sump 400. The distance between the circumferential sump wall 420 and the circumferential sump wall 410 is denoted as L16, and the length of the shallow sump bottom 451 is L9, where L16>L9. This helps form the circumferential sump opening 401 between the shallow sump bottom 451 and the circumferential sump wall 420, thereby helping the oil sump 400 collect more lubricating oil.

Refer to FIG. 9 and FIG. 11. In an embodiment, along the radial direction R of the intermediate gear set, lengths of the two axial sump walls 430 and 440, the connecting axial sump wall 460, and the circumferential sump wall 420 are all shorter than a distance between the deep sump bottom 452 and an end that is of the circumferential sump wall 410 and that is away from the deep sump bottom 452. Along the radial direction R of the intermediate gear set, the length of the axial sump wall 430 is shorter than a length of any one of the axial sump wall 440, the connecting axial sump wall 460, and the circumferential sump wall 420.

As shown in FIG. 11, in this embodiment of this application, along the radial direction R of the intermediate gear set, the lengths of the axial sump wall 430, the axial sump wall 440, the connecting axial sump wall 460, and the circumferential sump wall 420 are respectively denoted as L17, L18, L19, and L20, and the distance between the deep sump bottom 452 and the end that is of the circumferential sump wall 410 and that is away from the deep sump bottom 452 is denoted as L21, where L17<L21, L18<L21, L19<L21, and L20<L21. This helps the circumferential sump wall 410 better block oil, and better lead lubricating oil flying out along the tangent direction of the output gear 300 and intermediate driven gear 210 into the oil sump 400 when the output gear 300 and intermediate driven gear 210 rotate and churn oil. The circumferential sump wall 420 is smaller, which helps more lubricating oil fall into the oil sump 400 more smoothly when the output gear 300 rotates. L17<L18, L17<L19, and L17<L20. This helps reduce space occupation of the oil sump 400 along direction perpendicular to the axial direction O of the intermediate gear set.

Still refer to FIG. 9. According to the invention, the deep sump bottom 452 includes two recess sections 452a and a bump section 452b that are connected, and the two recess sections 452a are arranged on two sides of the bump section 452b along the circumferential direction C of the intermediate gear set. Along the radial direction R of the intermediate gear set, each recess section 452a recesses toward the intermediate shaft 230, and the bump section 452b protrudes away from the intermediate shaft 230.

In this embodiment the deep sump bottom 452 includes the two recess sections 452a and the bump section 452b that are connected, which may be similarly understood as a wavy deep sump bottom 452. The bump section 452b helps the lubricating oil at the deep sump bottom 452 to be distributed to the two recess sections 452a, and helps the lubricating oil to be more smoothly led out from the recess section 452a of the deep sump bottom 452 to cool and lubricate the reducer 10.

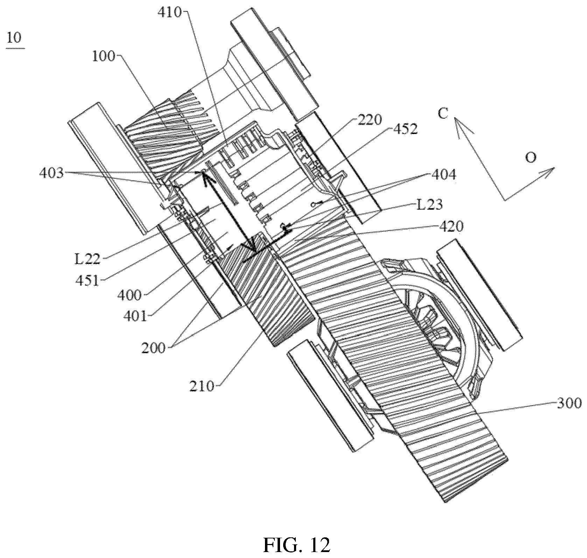

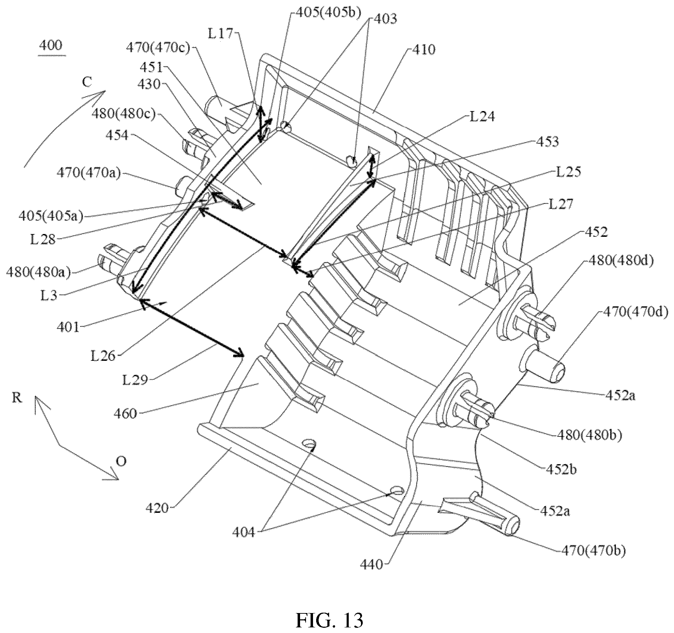

Refer to FIG. 12 and FIG. 13. FIG. 12 is a diagram of a structure of the reducer 10 according to an embodiment of this application, and FIG. 13 is a diagram of a structure of the oil sump 400 according to an embodiment of this application. In an embodiment, the oil sump 400 further includes two groups of lubricating oil holes 403 and 404, each group of lubricating oil holes includes at least one lubricating oil hole, and the at least one lubricating oil hole is arranged at intervals along the axial direction O of the intermediate gear set. The group of lubricating oil holes 403 are configured to lubricate an engagement position between the intermediate gear set 200 and the input gear 100, and the group of lubricating oil holes 404 are configured to lubricate an engagement position between the output gear 300 and the intermediate gear set 200. Along the circumferential direction C of the intermediate gear set, a distance between the group of lubricating oil holes 403 and the output gear 300 is longer than a distance between the group of lubricating oil holes 404 and the output gear 300. The group of lubricating oil holes 403 and the circumferential sump opening 401 are arranged oppositely along the circumferential direction C of the intermediate gear set. The group of lubricating oil holes 404 are spaced from the circumferential sump opening 401 along the axial direction O of the intermediate gear set.

In this embodiment of this application, the lubricating oil hole is configured to lead the lubricating oil collected in the oil sump 400 to the input gear 100, the intermediate gear set 200, and the output gear 300 for cooling and lubrication. The input gear 100, the intermediate gear set 200, and the output gear 300 are all oblique gears. Each group of lubricating oil holes include at least one lubricating oil hole, to ensure that the lubricating oil can be better led into an engagement position between gears when the oblique gears rotate forward or reversely. The group of lubricating oil holes 403 are configured to lubricate the engagement position between the intermediate gear set 200 and the input gear 100, so that lubricating oil led out from the group of lubricating oil holes 403 can cool and lubricate both the intermediate driven gear 210 and the input gear 100. The group of lubricating oil holes 404 are configured to lubricate the engagement position between the output gear 300 and the intermediate gear set 200, and this helps the group of lubricating oil holes 404 implement cooling and lubrication for both the output gear 300 and the intermediate gear set 200. In this embodiment of this application, along the circumferential direction C of the intermediate gear set, a distance between the group of lubricating oil holes 403 and the output gear 300 is denoted as L22, and a distance between the group of lubricating oil holes 404 and the output gear 300 is denoted as L23, where L22>L23 (as shown in FIG. 12).

Still refer to FIG. 12 and FIG. 13. In an embodiment, the two groups of lubricating oil holes 403 and 404 may be located on the circumferential sump wall 410 and the circumferential sump wall 420 respectively, the group of lubricating oil holes 403 on the circumferential sump wall 410 are configured to lubricate the engagement position between the intermediate driven gear 210 and the input gear 100, and the group of lubricating oil holes 404 on the circumferential sump wall 420 are configured to lubricate the engagement position between the output gear 300 and the intermediate drive gear 220 of the intermediate shaft 230. The group of lubricating oil holes 403 on the circumferential sump wall 410 and the group of lubricating oil holes 404 on the circumferential sump wall 420 are arranged oppositely along the circumferential direction C of the intermediate gear set. The group of lubricating oil holes 403 on the circumferential sump wall 410 penetrates the circumferential sump wall 410 and is close to a closest part of the shallow sump bottom 451, and the group of lubricating oil holes 404 on the circumferential sump wall 420 penetrates the circumferential sump wall 420 and is close to a closest part of the deep sump bottom 452.

Still refer to FIG. 12 and FIG. 13. In an embodiment, the two groups of lubricating oil holes 403 and 404 may be located at the shallow sump bottom 451 and the deep sump bottom 452 respectively, the group of lubricating oil holes 403 at the shallow sump bottom 451 are configured to lubricate the engagement position between the intermediate driven gear 210 and the input gear 100, and the group of lubricating oil holes 404 at the deep sump bottom 452 are configured to lubricate the engagement position between the output gear 300 and the intermediate drive gear 220 of the intermediate shaft 230. The group of lubricating oil holes 403 at the shallow sump bottom 451 and the group of lubricating oil holes 404 at the deep sump bottom 452 are arranged oppositely along the circumferential direction C of the intermediate gear set. The group of lubricating oil holes 403 at the shallow sump bottom 451 penetrates a deepest part of the shallow sump bottom 451, and the group of lubricating oil holes 404 at the deep sump bottom 452 penetrates a deepest part of the deep sump bottom 452.

Still refer to FIG. 13. In an embodiment, the oil sump 400 further includes a first flow distribution rib 453, the first flow distribution rib 453 is fastened to the shallow sump bottom 451, and the first flow distribution rib 453 and the axial sump wall 430 are arranged oppositely along the axial direction O of the intermediate gear set. A length of the first flow distribution rib 453 is shorter than the length of the axial sump wall 430 along the radial direction R of the intermediate gear set, and a length of the first flow distribution rib 453 is shorter than the length of the axial sump wall 430 along the circumferential direction C of the intermediate gear set. A distance between the first flow distribution rib 453 and the connecting axial sump wall 460 along the axial direction O of the intermediate shaft is shorter than a distance between the first flow distribution rib 453 and the axial sump wall 430.

In this embodiment of this application, the first flow distribution rib 453 may be configured to prevent lubricating oil that is churned by the intermediate driven gear 210 and that is led into the shallow sump bottom 451 from the circumferential sump opening 401 from flowing into the deep sump bottom 452, and the first flow distribution rib 453 and the axial sump wall 430 are arranged oppositely along the axial direction O of the intermediate gear set to form oil storage space. The length of the first flow distribution rib 453 along the radial direction R of the intermediate gear set is denoted as L24, and the length of the axial sump wall 430 along the radial direction R of the intermediate gear set is denoted as L17, where L24<L17, so that when a storage amount of the lubricating oil is higher than the length of the first flow distribution rib 453 along the radial direction R of the intermediate gear set, the lubricating oil overflows from the first flow distribution rib 453 to the deep sump bottom 452. This avoids a case in which the lubricating oil completely stays at the shallow sump bottom 451 and cannot flow into the deep sump bottom 452, so that the lubricating oil can flow out of the deep sump bottom 452 from the group of lubricating oil holes 404 to lubricate another gear. In this embodiment of this application, when the first flow distribution rib 453 is a triangle, L24 is the maximum length. In this embodiment of this application, when the axial sump wall 430 is an irregular plate, L17 is the maximum length.

In this embodiment of this application, the length of the first flow distribution rib 453 along the circumferential direction C of the intermediate gear set is denoted as L25, and the length of the axial sump wall 430 along the circumferential direction C of the intermediate gear set is denoted as L3, where L25<L3, so that when a storage amount of the lubricating oil is higher than the length of the first flow distribution rib 453 along the circumferential direction C of the intermediate gear set, the lubricating oil overflows from the first flow distribution rib 453 to the deep sump bottom 452. This improves utilization of the lubricating oil.

In this embodiment of this application, the distance between the first flow distribution rib 453 and the connecting axial sump wall 460 along the axial direction O of the intermediate shaft is denoted as L27, and the distance between the first flow distribution rib 453 and the axial sump wall 430 along the axial direction O of the intermediate shaft is denoted as L26, where L27<L26. This helps form large oil collecting space between the first flow distribution rib 453, the axial sump wall 430, and the shallow sump bottom 451, to collect and store more lubricating oil.

Refer to FIG. 12 and FIG. 13. In an embodiment, along the axial direction O of the intermediate gear set, the group of lubricating oil holes 403 are arranged between the first flow distribution rib 453 and the axial sump wall 430, so that the lubricating oil can be led from the oil sump 400 to the engagement position between the input gear 100 and the intermediate driven gear 210 through the group of lubricating oil holes 403, to cool and lubricate the input gear 100 and the intermediate driven gear 210.

Refer to FIG. 2 and FIG. 13. In an embodiment, the oil sump 400 includes a plurality of nozzles 470 (as shown in FIG. 13), and the nozzles 470 are configured to convey the lubricating oil in the oil sump 400 to a housing of the reducer 10. The plurality of nozzles 470 are distributed on sump walls of the oil sump 400 that are arranged along the axial direction O of the intermediate gear set. Along the axial direction O of the intermediate gear set, each nozzle 470 protrudes, away from the inside of the oil sump 400, from a sump wall on which the nozzle 470 is located, and an opening of each nozzle 470 faces away from the inside of the oil sump 400.

In this embodiment of this application, the plurality of nozzles 470 are distributed on the axial sump wall 430 and the axial sump wall 440 of the oil sump 400 that are arranged along the axial direction O of the intermediate gear set. This helps the nozzles 470 spray lubricating oil along the axial direction O of the intermediate gear set to lubricate the housing of the reducer 10. Along the axial direction O of the intermediate gear set, each nozzle 470 protrudes, away from the inside of the oil sump 400, from the sump wall on which the nozzle 470 is located, and the opening of each nozzle 470 faces away from the inside of the oil sump 400. This helps the lubricating oil in the oil sump 400 form an impulse for spraying when the lubricating oil is led out of the oil sump 400 from the nozzle 470, so that the lubricating oil can be sprayed farther, thereby facilitating cooling and lubrication of the housing of the reducer 10.

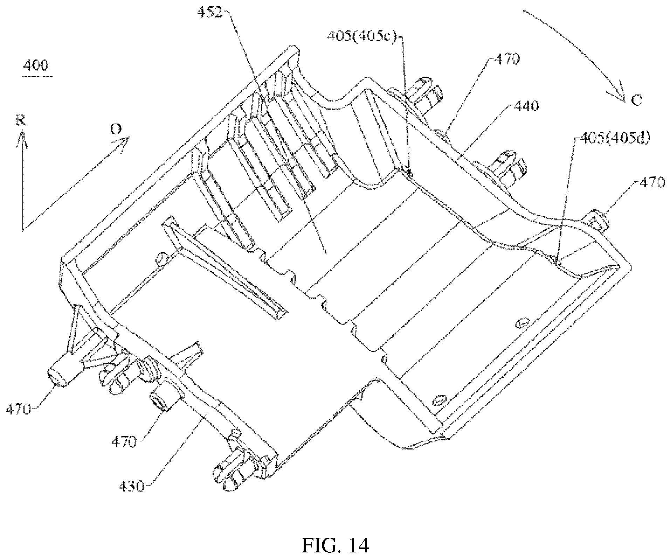

Refer to FIG. 2, FIG. 13, and FIG. 14. FIG. 14 is a diagram of a structure of the oil sump 400 according to an embodiment of this application. In an embodiment, each axial sump wall is configured to fasten at least one nozzle 470, each axial sump wall includes at least one nozzle hole 405, and each nozzle 470 is connected to the oil sump 400 through one nozzle hole 405. Along the axial direction O of the intermediate gear set, each nozzle hole 405 located on the axial sump wall 430 penetrates the axial sump wall 430, and each nozzle hole 405 located on the axial sump wall 440 penetrates the axial sump wall 440.

In this embodiment of this application, the lubricating oil in the oil sump 400 is sprayed from the nozzle 470 through the nozzle hole 405, to cool and lubricate the housing of the reducer 10. As shown in FIG. 13, along the axial direction O of the intermediate gear set, nozzle holes 405a and 405b located on the axial sump wall 430 penetrate the axial sump wall 430, and as shown in FIG. 14, nozzle holes 405c and 405d located on the axial sump wall 440 penetrate the axial sump wall 440, so that the lubricating oil can flow out from the axial sump wall 430 and the axial sump wall 440 of the oil sump 400.

Refer to FIG. 2 and FIG. 13. In an embodiment, the oil sump 400 further includes a second flow distribution rib 454, the second flow distribution rib 454 is fastened to the shallow sump bottom 451, and the second flow distribution rib 454 is fastened to the axial sump wall 430 along one end of the axial direction O of the intermediate shaft. A length of the second flow distribution rib 454 is shorter than the length of the shallow sump bottom 451 along the axial direction O of the intermediate shaft. The axial sump wall 430 includes the two nozzle holes 405a and 405b, and the two nozzle holes 405a and 405b are arranged on two sides of the second flow distribution rib 454 along the circumferential direction C of the intermediate shaft.

In this embodiment of this application, the length of the second flow distribution rib 454 along the axial direction O of the intermediate shaft is denoted as L28, and the length of the shallow sump bottom 451 along the axial direction O of the intermediate shaft is denoted as L29, where L28<L29. A shorter length of the second flow distribution rib 454 helps lubricating oil churned when the intermediate driven gear 210 rotates better fall into a deep part of the shallow sump bottom 451 of the oil sump 400, and helps the lubricating oil flow out of the group of lubricating oil holes 403 to cool and lubricate the input gear 100 and the intermediate gear set 200. The axial sump wall 430 includes the two nozzle holes 405a and 405b, and the two nozzle holes 405a and 405b are arranged on two sides of the second flow distribution rib 454 along the circumferential direction C of the intermediate shaft, to facilitate flowing out of the lubricating oil churned when the intermediate gear set 200 rotates. A part of the lubricating oil blocked by the second flow distribution rib 454 flows out from the nozzle hole 405a, and lubricating oil not blocked by the second flow distribution rib 454 may flow out from the nozzle hole 405b, to cool and lubricate the housing of the reducer 10.

Still refer to FIG. 13. In an embodiment, along the axial direction O of the intermediate gear set, the length of the second flow distribution rib 454 is shorter than a spacing between the first flow distribution rib 453 and the axial sump wall 430.

In this embodiment of this application, along the axial direction O of the intermediate gear set, the length of the second flow distribution rib 454 is L28, and the spacing between the first flow distribution rib 453 and the axial sump wall 430 is L26, where L28<L26. There is a spacing between the second flow distribution rib 454 and the first flow distribution rib 453 along the axial direction O of the intermediate gear set, so that the lubricating oil can enter space between the second flow distribution rib 454 and the circumferential sump wall 410 from the spacing. In an embodiment, a difference between L26 and L28 is greater than L28, so that the lubricating oil can enter the space between the second flow distribution rib 454 and the circumferential sump wall 410.

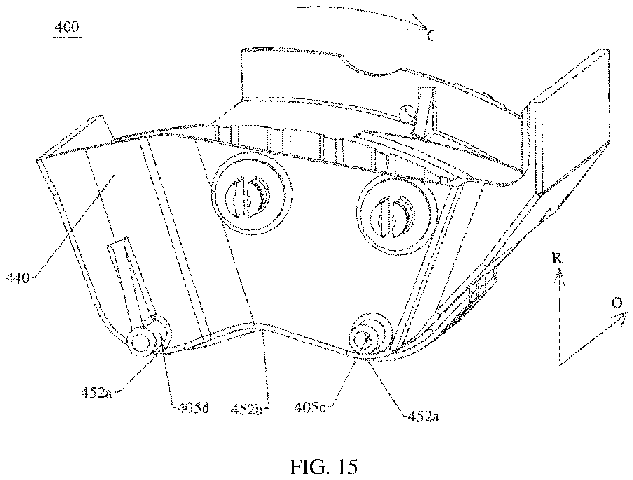

Refer to FIG. 14 and FIG. 15. FIG. 15 is a diagram of a structure of the oil sump 400 according to an embodiment of this application. In an embodiment, the axial sump wall 440 fastened to the deep sump bottom 452 includes the two nozzle holes 405c and 405d (as shown in FIG. 14). Projections of the two nozzle holes 405c and 405d along the radial direction R of the intermediate gear set are respectively located in the two recess sections 452a, and a distance between each nozzle hole 405 and the recess section 452a in which the projection of the nozzle hole 405 is located along the radial direction R of the intermediate gear set is shorter than a distance between the bump section 452b and the recess section 452a.

In this embodiment of this application, the projections of the two nozzle holes 405c and 405d along the radial direction R of the intermediate gear set are respectively located in the two recess sections 452a, in other words, the lubricating oil distributed by the two recess sections 452a of the deep sump bottom 452 of the oil sump 400 may separately flow out from the two nozzle holes 405c and 405d of the axial sump wall 440, to cool and lubricate the housing of the reducer 10. In addition, the design of the recess sections 452a also facilitates implementation of this process, so that a small amount of lubricating oil can be led out from the nozzle hole 405 even when there are a small amount of lubricating oil in the deep sump bottom 452. The distance between each nozzle hole 405 and the recess section 452a in which the projection of the nozzle hole 405 is located along the radial direction R of the intermediate gear set is shorter than the distance between the bump section 452b and the recess section 452a. This helps the lubricating oil be led out from the two recess sections 452a separately. If the distance between each nozzle hole 405 and the recess section 452a in which the projection of the nozzle hole 405 is located along the radial direction R of the intermediate gear set is longer than the distance between the bump section 452b and the recess section 452a, and the lubricating oil needs to flow out from the two nozzle holes 405c and 405d, a larger amount of lubricating oil needs to be collected in the deep sump bottom 452.

Still refer to FIG. 2 and FIG. 13. In an embodiment, the oil sump 400 includes a plurality of fastening protrusions 480, and the fastening protrusions 480 are configured to fasten the housing of the reducer 10. Each fastening protrusion 480 extends away from the inside of the oil sump 400 along the axial direction O of the intermediate gear set. At least one fastening protrusion 480 and at least one nozzle 470 are arranged along the circumferential direction C of the intermediate gear set, and at least one fastening protrusion 480 and at least one nozzle 470 are arranged along the radial direction R of the intermediate gear set.

In this embodiment of this application, the fastening protrusion 480 uses a conical opening positioning pin, which helps reduce bolts, simplify a mounting process, and fasten a structure. The fastening protrusions 480 of the oil sump 400 are configured to fasten the oil sump 400 to the housing of the reducer 10, and each fastening protrusion 480 extends away from the inside of the oil sump 400 along the axial direction O of the intermediate gear set, so that space is provided for fastening the oil sump 400 to the housing of the reducer 10. The at least one fastening protrusion 480 and the at least one nozzle 470 are arranged along the circumferential direction C of the intermediate gear set, and the at least one fastening protrusion 480 and the at least one nozzle 470 are arranged along the radial direction R of the intermediate gear set. As shown in FIG. 13, one fastening protrusion 480 is denoted as 480a, one nozzle 470 is denoted as 470a, one fastening protrusion 480 is denoted as 480b, and one nozzle 470 is denoted as 470b. In this case, the fastening protrusion 480a and the nozzle 470a are arranged along the circumferential direction C of the intermediate gear set. This helps the oil sump 400 and the housing of the reducer 10 be fastened along the circumferential direction and maintain circumferential stability. When the at least one fastening protrusion 480 and the at least one nozzle 470 are arranged along the radial direction R of the intermediate gear set, even if the oil sump 400, the input gear 100, the intermediate gear set 200, and the output gear 300 are arranged along the circumferential direction in a more compact manner, mounting space can also be provided for the oil sump 400 along the radial direction.

Still refer to FIG. 2 and FIG. 13. In an embodiment, each axial sump wall is configured to fasten at least one fastening protrusion 480. At least one fastening protrusion 480 and at least one nozzle 470 that are fastened to the axial sump wall 430 are arranged along the circumferential direction C of the intermediate gear set. At least one fastening protrusion 480 and at least one nozzle 470 that are fastened to the axial sump wall 440 are arranged along the radial direction R of the intermediate gear set.

In this embodiment of this application, the oil sump 400 is fastened to the housing of the reducer 10 via the fastening protrusion 480 on the axial sump wall 430 and the fastening protrusion 480 on the axial sump wall 440. The axial sump wall 430 has a short length along the radial direction R of the intermediate gear set, and the at least one fastening protrusion 480 and the at least one nozzle 470 that are fastened to the axial sump wall 430 are arranged along the circumferential direction C of the intermediate gear set. As shown in FIG. 13, one fastening protrusion 480 is denoted as 480c, one nozzle 470 is denoted as 470c, and the fastening protrusion 480c and the nozzle 470c are arranged along the circumferential direction C of the intermediate gear set, which facilitates an arrangement layout between the fastening protrusion 480c and the nozzle 470c. The axial sump wall 440 has a long length along the radial direction R of the intermediate gear set, and the at least one fastening protrusion 480 and the at least one nozzle 470 that are fastened to the axial sump wall 440 are arranged along the radial direction R of the intermediate gear set. As shown in FIG. 13, one fastening protrusion 480 is denoted as 480d, one nozzle 470 is denoted as 470d, and the fastening protrusion 480d and the nozzle 470d are arranged along the radial direction R of the intermediate gear set, which facilitates corresponding fastening of a hole and the fastening protrusion 480 on the housing of the reducer 10.

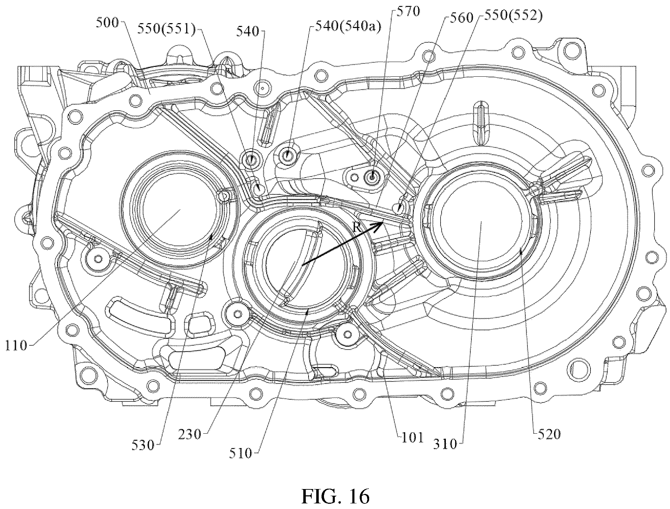

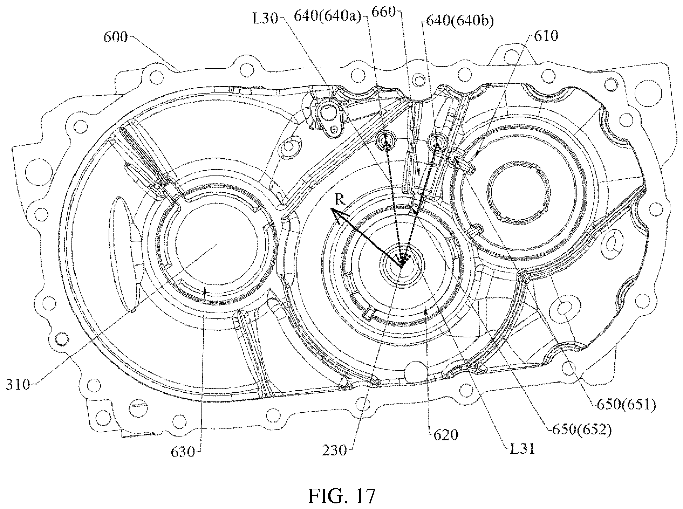

Refer to FIG. 2, FIG. 13, FIG. 16, and FIG. 17. FIG. 16 is a diagram of a structure of a reducer housing 500 according to an embodiment of this application, and FIG. 17 is a diagram of a structure of a reducer end plate 600 according to an embodiment of this application. In an embodiment, the reducer 10 includes the reducer housing 500 and the reducer end plate 600, space between the reducer housing 500 and the reducer end plate 600 is configured to accommodate the reducer 10 and the oil sump 400, the reducer housing 500 includes a housing input shaft bearing groove 530, a housing intermediate shaft bearing groove 510, a housing output shaft bearing groove 520, and at least one housing fastening hole 540, and the housing fastening hole 540 is configured to fasten the oil sump 400. Along the axial direction O of the intermediate gear set, the reducer end plate 600, the axial sump wall 430, the axial sump wall 440, and any housing fastening hole 540 of the reducer housing 500 are sequentially arranged. The bottom of the space between the reducer housing 500 and the reducer end plate 600 is configured to store lubricating oil, the at least one housing fastening hole 540 is arranged on a side that is of the housing intermediate shaft bearing groove 510 and that is away from the bottom of the space, and the at least one housing fastening hole 540 is arranged between the housing input shaft bearing groove 530 and the housing output shaft bearing groove 520.

In this embodiment of this application, the reducer housing 500 and the reducer end plate 600 jointly enclose a receptacle of the reducer 10, and the receptacle of the reducer 10 is configured to accommodate the input gear 100, the intermediate gear set 200, the output gear 300, and the oil sump 400. The reducer housing 500 integrates a motor housing (as shown in FIG. 2). The integrated housing may also be referred to as an intermediate integrated housing. The intermediate integrated housing and the reducer end plate 600 form a reducer receptacle, and the reducer receptacle is configured to accommodate the reducer 10. The intermediate integrated housing and a motor end plate (not shown in the figure) form a motor receptacle, and the motor receptacle is configured to accommodate the motor 20.

In this embodiment of this application, the housing input shaft bearing groove 530, the housing intermediate shaft bearing groove 510, and the housing output shaft bearing groove 520 are respectively configured to accommodate a housing input shaft bearing (not shown in the figure), a housing intermediate shaft bearing (not shown in the figure), and a housing output shaft bearing (not shown in the figure), inner rings of the housing input shaft bearing, the housing intermediate shaft bearing, and the housing output shaft bearing are respectively configured to fasten the input shaft 110, the intermediate shaft 230, and the output shaft 310 of the reducer 10, the intermediate shaft 230 is configured to fasten a gear of the intermediate gear set 200, and the output shaft 310 is configured to fasten the output gear 300. The housing fastening hole 540 of the reducer housing 500 is configured to accommodate the fastening protrusion 480 of the axial sump wall 440 of the oil sump 400, and the housing fastening hole 540 and the fastening protrusion 480 match with each other (as shown in FIG. 16) to fasten the oil sump 400 to the reducer housing 500.

In this embodiment of this application, the intermediate driven gear 210 and the output gear 300 are arranged along the axial direction O of the intermediate gear set, and the reducer end plate 600, the axial sump wall 430, the axial sump wall 440, and any housing fastening hole 540 of the reducer housing 500 are sequentially arranged along the axial direction O of the intermediate gear set (as shown in FIG. 2 and FIG. 16). In this case, in a process of mounting the oil sump 400, the shallow sump bottom 451 connected to the axial sump wall 430 has a larger overlapping projection area with the projection of the intermediate driven gear 210 along the radial direction R of the intermediate gear set, so that more lubricating oil churned when the intermediate gear set 200 rotates is collected by the oil sump 400. An oil storage pool 101 is formed at the bottom of the space between the reducer housing 500 and the reducer end plate 600, and the oil storage pool 101 is configured to store lubricating oil. The lubricating oil churned when the intermediate driven gear 210 and the output gear 300 rotate all come from the oil storage pool 101.

In this embodiment of this application, the at least one housing fastening hole 540 is arranged on the side that is of the housing intermediate shaft bearing groove 510 and that is away from the bottom of the space, to facilitate high-position fastening of the oil sump 400 in the reducer 10, and help the lubricating oil in the oil sump 400 flow more smoothly from the two groups of lubricating oil holes 403 and 404 and the nozzle 470 (as shown in FIG. 13) to cool and lubricate the reducer 10.

In this embodiment of this application, the at least one housing fastening hole 540 is arranged between the housing input shaft bearing groove 530 and the housing output shaft bearing groove 520. This helps the oil sump 400 lubricate both the housing intermediate shaft bearing in the housing input shaft bearing groove 530 and the housing output shaft bearing in the housing output shaft bearing groove 520. A distance between the housing input shaft bearing groove 530 and the housing output shaft bearing groove 520 is long, and the at least one housing fastening hole 540 is arranged between the housing input shaft bearing groove 530 and the housing output shaft bearing groove 520, in other words, the oil sump 400 is mainly mounted between the housing input shaft bearing groove 530 and the housing output shaft bearing groove 520, so that the oil sump 400 can cool and lubricate both the housing input shaft bearing groove 530 and the housing output shaft bearing groove 520.

Still refer to FIG. 2 and FIG. 16. In an embodiment, the reducer housing 500 further includes the housing input shaft bearing groove 530, and the at least one housing fastening hole 540 is arranged between the housing input shaft bearing groove 530 and the housing output shaft bearing groove 520.

Refer to FIG. 13 and FIG. 16. In an embodiment, the axial sump wall 440 includes two nozzles 470, and the two nozzles 470 respectively lubricate the housing input shaft bearing groove 530 and the housing output shaft bearing groove 520 of the reducer housing 500.

In this embodiment of this application, along the axial direction O of the intermediate shaft, openings of the two nozzles 470 face the reducer housing 500, so that the lubricating oil in the oil sump 400 is sprayed to the reducer housing 500 from the nozzles 470. The two nozzles 470 are respectively the nozzle 470b and the nozzle 470d, lubricating oil sprayed by the nozzle 470d is used to lubricate the housing input shaft bearing groove 530, and lubricating oil sprayed by the nozzle 470b is used to lubricate the housing output shaft bearing groove 520.

Still refer to FIG. 13 and FIG. 16. In an embodiment, the reducer housing 500 further includes two housing connection holes 550, and the two housing connection holes 550 of the reducer housing 500 are respectively configured to connect to the housing input shaft bearing groove 530 and the housing output shaft bearing groove 520 of the reducer housing 500. The two housing connection holes 550 are arranged between the housing input shaft bearing groove 530 and the housing output shaft bearing groove 520. The two housing connection holes 550 are arranged between the at least one housing fastening hole 540 and the housing intermediate shaft bearing groove 510.

In this embodiment of this application, the two housing connection holes 550 are respectively a first housing connection hole 551 and a second housing connection hole 552. The first housing connection hole 551 is configured to receive the lubricating oil sprayed by the nozzle 470d, to lubricate the housing input shaft bearing groove 530. The lubricating oil sprayed by the nozzle 470d is directly sprayed to the first housing connection hole 551. The second housing connection hole 552 is configured to receive the lubricating oil sprayed by the nozzle 470b, to lubricate the housing output shaft bearing groove 520. The lubricating oil sprayed by the nozzle 470b is sprayed onto an inner wall of the reducer housing 500, and is led into the second housing connection hole 552 through a reducer housing flow boss 560. The two housing connection holes 551 and 552 are arranged between the housing input shaft bearing groove 530 and the housing output shaft bearing groove 520, so that the lubricating oil flows through the two housing connection holes 551 and 552 in a shorter path, to lubricate the housing input shaft bearing groove 530 and the housing output shaft bearing groove 520 more quickly. The two housing connection holes 551 and 552 are arranged between a housing fastening hole 540a and the housing intermediate shaft bearing groove 510, to facilitate opening of the housing connection holes 550 on the reducer housing 500.

Still refer to FIG. 13, FIG. 14, and FIG. 16. In an embodiment, the axial sump wall 440 includes the two nozzle holes 405c and 405d (as shown in FIG. 14). The two nozzles 470d and 470b that are respectively connected to the two nozzle holes 405c and 405d are respectively configured to connect to the two housing connection holes 551 and 552 of the housing (as shown in FIG. 13). Along an axial direction O of the reducer, a projection of at least one of the two nozzles 470d and 470b that are respectively connected to the two nozzle holes 405c and 405d partially overlaps with a projection of at least one of the connected housing connection holes 550.

In this embodiment of this application, the lubricating oil in the oil sump 400 flows into the housing output shaft bearing groove 520 or the housing input shaft bearing groove 530 through the two nozzle holes 405c and 405d, the two nozzles 470d and 470b, and the two housing connection holes 551 and 552 sequentially, to lubricate the housing output shaft bearing groove 520 and the housing input shaft bearing groove 530. Along the axial direction O of the reducer, a projection of the nozzle 470d connected to the nozzle hole 405c partially overlaps with a projection of the connected housing connection hole 551, so that the lubricating oil sprayed from the oil sump 400 can lubricate the housing output shaft bearing groove 520 or the housing input shaft bearing groove 530 with a shorter path and a faster speed. It should be noted that the axial direction O of the reducer is parallel to the axial direction O of the intermediate shaft.

Still refer to FIG. 16. In an embodiment, the reducer housing 500 further includes an oil outlet hole 570 (as shown in FIG. 16), the oil outlet hole 570 is configured to connect to an oil pump (not shown in the figure) through an internal oil passage of the reducer housing 500, and the oil outlet hole 570 is configured to spray oil into the oil sump 400 through an oil spray nozzle. The oil outlet hole 570 is arranged between the housing input shaft bearing groove 530 and the housing output shaft bearing groove 520. Along a radial direction R1 of the output shaft, the oil outlet hole 570 is arranged between the at least one housing fastening hole 540 and the housing output shaft bearing groove 520. Along the radial direction R of the intermediate gear set, the two housing connection holes 550 are arranged between the oil outlet hole 570 and the housing intermediate shaft bearing groove 510.

In this embodiment of this application, the oil outlet hole 570 is configured to connect to the oil pump through the internal oil passage of the reducer housing 500, and the oil outlet hole 570 is configured to spray oil into the oil sump 400 through the oil spray nozzle. When rotation speeds of the intermediate driven gear 210 and the output gear 300 of the reducer 10 are insufficient to churn the lubricating oil in the oil storage pool 101 into the oil sump 400, and the lubricating oil in the oil sump 400 is insufficient to cool and lubricate the input gear 100, the intermediate gear set 200, the output gear 300, and the like in the reducer 10, the reducer 10 needs to output lubricating oil from the oil outlet hole 570 to add oil to the oil sump 400. That is, disposing of the oil outlet hole 570 can ensure that the reducer 10 can implement cooling and lubrication in time in any running working status. The oil outlet hole 570 is arranged between the housing input shaft bearing groove 530 and the housing output shaft bearing groove 520. This facilitates a layout of the internal oil passage of the reducer housing 500, and helps the lubricating oil in the oil outlet hole 570 be smoothly led into the oil sump 400. The two housing connection holes 551 and 552 are arranged between the oil outlet hole 570 and the housing intermediate shaft bearing groove 510 along the radial direction R of the intermediate gear set, in other words, the oil outlet hole 570 is relatively arranged at a position of the oil sump 400 away from the intermediate gear set 200 along the radial direction R of the intermediate gear set. This helps the lubricating oil in the oil outlet hole 570 fall into the oil sump 400 along a gravity direction, to reduce a power loss.

Still refer to FIG. 2. In an embodiment, the electric vehicle 1 includes an oil pump, and the oil pump is configured to transport lubricating oil to an internal cavity of the reducer 10 or the oil sump 400 through an internal oil passage of the reducer housing 500. The output gear 300 of the reducer 10 is configured to receive a driving force of the motor shaft when the motor shaft rotates in a first direction, to drive the lubricating oil to enter the oil sump 400 from the radial sump opening 402. The intermediate driven gear 210 of the reducer 10 is configured to receive a driving force of the motor shaft when the motor shaft rotates in a second direction, to drive the lubricating oil to enter the oil sump 400 from the radial sump opening 402. The first direction is opposite to the second direction.

In this embodiment of this application, the lubricating oil in the oil sump 400 may be led into by the internal oil passage of the reducer housing 500 through the oil outlet hole 570, or may be led into the oil sump 400 when the output gear 300 and the intermediate driven gear 210 of the reducer 10 rotate and churn the lubricating oil in the oil storage pool 101 at the bottom of the reducer 10. It should be noted that a rotation direction of the motor shaft along the first direction is the same as a forward rotation direction of the motor 20, and a rotation direction of the motor shaft along the second direction is the same as a reverse rotation direction of the motor 20.

Still refer to FIG. 2, FIG. 13, and FIG. 17. In an embodiment, the reducer end plate 600 includes an end plate input shaft bearing groove 610, an end plate intermediate shaft bearing groove 620, and at least one end plate fastening hole 640, and the end plate fastening hole 640 is used to fasten the oil sump 400. The at least one end plate fastening hole 640 is arranged on a side that is of the end plate intermediate shaft bearing groove 620 and that is away from the oil storage pool 101. Along the radial direction R of the intermediate gear set, a distance between each end plate fastening hole 640 and a shaft center of the intermediate shaft 230 is longer than the radius of the intermediate driven gear 210.

In this embodiment of this application, the end plate input shaft bearing groove 610 and the end plate intermediate shaft bearing groove 620 are respectively configured to accommodate an end plate input shaft bearing 611 and an end plate intermediate shaft bearing 621 (as shown in FIG. 2), an inner ring of the end plate input shaft bearing 611 and an inner ring of the end plate intermediate shaft bearing 621 are respectively configured to fasten the input shaft 110 and the intermediate shaft 230, and the end plate fastening hole 640 of the reducer end plate 600 matches with the fastening protrusion 480 located on the axial sump wall 430 of the oil sump 400 to fasten the oil sump 400 to the reducer end plate 600. The at least one end plate fastening hole 640 is arranged on the side that is of the end plate intermediate shaft bearing groove 620 and that is away from the oil storage pool 101, to facilitate high-position fastening of the oil sump 400 in the reducer 10, and help the lubricating oil in the oil sump 400 flow more smoothly from the two groups of lubricating oil holes 403 and 404 and the nozzles 470a and 470c to cool and lubricate the reducer 10.

In this embodiment of this application, along the radial direction R of the intermediate gear set, distances between end plate fastening holes 640a and 640b and the shaft center of the intermediate shaft 230 are respectively denoted as L30 and L31 (as shown in FIG. 17), and the radius of the intermediate driven gear 210 is denoted as L32 (as shown in FIG. 2), where L30>L32, and L31>L32. This facilitates disposing of an end plate fastening hole 640 on the reducer end plate 600 while bypassing the intermediate gear set 200, facilitates secure mounting of the oil sump 400 above the intermediate gear set 200, and helps the lubricating oil in the oil storage pool 101 churned by the intermediate driven gear 210 be led into the oil sump 400 more smoothly.

Still refer to FIG. 2 and FIG. 17. In an embodiment, the reducer end plate 600 further includes an end plate output shaft bearing groove 630, the end plate output shaft bearing groove 630 is configured to accommodate an end plate output shaft bearing 631 (as shown in FIG. 2), and an inner ring of the end plate output shaft bearing 631 is configured to fasten the output shaft 310.

In this embodiment of this application, the output shaft 310 is configured to fasten the output gear 300. When the output gear 300 rotates, the lubricating oil in the oil storage pool 101 may be churned and led into the oil sump 400.

Still refer to FIG. 2, FIG. 13, and FIG. 17. In an embodiment, the axial sump wall 430 includes two nozzles 470a and 470c (as shown in FIG. 13), to respectively lubricate the end plate input shaft bearing groove 610 and the end plate intermediate shaft bearing groove 620 of the reducer end plate 600. Along the axial direction O of the reducer, a projection of at least one of the two nozzles 470a and 470c that are respectively connected to the two nozzle holes 405a and 405c partially overlaps with a projection of at least one connected end plate connection hole 650.

In this embodiment of this application, openings of the two nozzles 470a and 470c face the reducer end plate 600, so that the lubricating oil in the oil sump 400 is sprayed to the reducer end plate 600 from the nozzles 470. Lubricating oil sprayed by the nozzle 470a is used to lubricate the end plate intermediate shaft bearing groove 620, and lubricating oil sprayed by the nozzle 470c is used to lubricate the end plate input shaft bearing groove 610.

Refer to FIG. 13 and FIG. 17. In an embodiment, the reducer end plate 600 includes two end plate connection holes 650, and the two end plate connection holes 650 of the reducer end plate 600 are respectively configured to connect to the end plate input shaft bearing groove 610 and the end plate intermediate shaft bearing groove 620 of the reducer end plate 600.

In this embodiment of this application, the two end plate connection holes 650 are respectively a first end plate connection hole 651 and a second end plate connection hole 652, the first end plate connection hole 651 is configured to connect to the end plate input shaft bearing groove 610 of the reducer end plate 600, and the second end plate connection hole 652 is configured to connect to the end plate intermediate shaft bearing groove 620 of the reducer end plate 600. The first end plate connection hole 651 is configured to receive the lubricating oil sprayed by the nozzle 470a, to lubricate the end plate intermediate shaft bearing groove 620. The second end plate connection hole 652 is configured to receive the lubricating oil sprayed by the nozzle 470c, to lubricate the end plate input shaft bearing groove 610. The second end plate connection hole 652 directly receives the lubricating oil sprayed by the nozzle 470c.

In this embodiment of this application, along the axial direction O of the reducer, a projection of the nozzle 470a connected to the nozzle hole 405a partially overlaps with a projection of the connected second end plate connection hole 652, so that the lubricating oil sprayed from the oil sump 400 can lubricate the end plate input shaft bearing groove 610 with a shorter path and a faster speed.

Still refer to FIG. 13 and FIG. 17. In an embodiment, the axial sump wall 430 includes the two nozzle holes 405a and 405b. The two nozzles 470a and 470c that are respectively connected to the two nozzle holes 405a and 405b are respectively configured to connect to the two end plate connection holes 652 and 651 of the reducer end plate 600.

In this embodiment of this application, the lubricating oil in the oil sump 400 flows into the end plate input shaft bearing groove 610 or the end plate intermediate shaft bearing groove 620 through the two nozzle holes 405a and 405b, the two nozzles 470a and 470c, and the two end plate connection holes 652 and 651 sequentially, to lubricate the end plate input shaft bearing groove 610 and the end plate intermediate shaft bearing groove 620.

Still refer to FIG. 13 and FIG. 17. In an embodiment, the reducer end plate 600 further includes an end plate connection groove 660. The end plate connection groove 660 is formed by two convex ribs on the reducer end plate 600 protruding along the axial direction O of the intermediate shaft toward the oil sump 400, and is configured to flow the lubricating oil sprayed by the nozzle 470c to the second end plate connection hole 652, to lubricate the end plate intermediate shaft bearing (not shown in the figure).

In this embodiment of this application, the two convex ribs protrude along the intermediate shaft 230 toward the oil sump 400, so that the end plate connection groove 660 collects the lubricating oil sprayed by the nozzle 470c of the oil sump 400 in a more centralized manner. The end plate connection groove 660 is connected to the second end plate connection hole 652 of the reducer end plate 600, and the lubricating oil in the oil sump 400 flows into the end plate intermediate shaft bearing groove 620 through the nozzle hole 405b, the nozzle 470c, the end plate connection groove 660, and the second end plate connection hole 652 sequentially, to lubricate the end plate intermediate shaft bearing.

Refer to FIG. 2. In an embodiment, along a circumferential direction C of the intermediate driven gear 210, the circumferential sump opening 401 of the oil sump 400 is located on a side that is of a highest point of the intermediate driven gear 210 along the gravity direction and that is away from the output gear 300.

In this embodiment of this application, along a radial direction R of the intermediate driven gear 210, a projection of the circumferential sump opening 401 partially overlaps with a projection of the intermediate driven gear 210. When along the circumferential direction C of the intermediate driven gear 210, the circumferential sump opening 401 is located on the side that is of the highest point of the intermediate driven gear 210 along the gravity direction and that is away from the output gear 300, a condition is created for the lubricating oil churned from the oil storage pool 101 when the intermediate driven gear 210 rotates to be led into the oil sump 400 from the circumferential sump opening 401. The radial direction R of the intermediate driven gear 210 is the same as the radial direction R of the intermediate gear set, and the circumferential direction C of the intermediate driven gear 210 is the same as the circumferential direction C of the intermediate gear set.

It should be noted that, in this application, the reducer may also be used as a separate apparatus to form a powertrain with a separate motor. In other words, in a plurality of embodiments in which a separate reducer has a two-way oil sump, a same reducer as described above is used. Details are not described herein again.

The reducer and the electric vehicle provided in embodiments of this application are described above in detail. The principle and embodiments of this application are described herein through specific examples. The descriptions about embodiments are merely provided to help understand the method and core ideas of this application. In addition, a person of ordinary skill in the art can make modifications in terms of the specific embodiments and application scopes according to the ideas of this application.

## Claims

1. A two-way oil-collecting reducer (10), wherein the reducer comprises an input gear (100), an intermediate gear set (200), an output gear (300), and an oil sump (400), the input gear (100) is configured to drive, via the intermediate gear set (200), the output gear (300) to rotate forward or reversely, a rotation direction of the intermediate gear set (200) is opposite to a rotation direction of the output gear (300), and the oil sump (400) comprises a radial sump opening (402) and a circumferential sump opening (401);
an orientation of the radial sump opening (402) is away from the intermediate gear set (200) along a radial direction of the intermediate gear set (200);
an orientation of the circumferential sump opening (401) faces the output gear (300) along a circumferential direction of the intermediate gear set (200); and
the radial sump opening (402) is connected to the circumferential sump opening (401);
**characterized in that** the oil sump (400) further comprises a sump bottom (450), the sump bottom (450) comprises a shallow sump bottom (451) and a deep sump bottom (452), the deep sump bottom (452) includes two recess sections (452a) and a bump section (452b) that are connected, and the two recess sections (452a) are arranged on two sides of the bump section (452b) along the circumferential direction (C) of the intermediate gear set (200).

2. The reducer (10) according to claim 1, wherein the oil sump (400) comprises:
two circumferential sump walls (410), wherein the two circumferential sump walls (410) are arranged oppositely along the circumferential direction of the intermediate gear set (200), and a length of one circumferential sump wall (410) is longer than a length of the other circumferential sump wall (410) along an axial direction of the intermediate gear set (200); and
two axial sump walls (430), wherein the two axial sump walls (430) are arranged oppositely along the axial direction of the intermediate gear set (200), and a length of one axial sump wall (430) is shorter than a length of the other axial sump wall (430) along the circumferential direction of the intermediate gear set (200).

3. The reducer (10) according to claim 2, wherein a spacing between the one circumferential sump wall (410) and the output gear (300) is greater than a spacing between the other circumferential sump wall (410) and the output gear (300), the one axial sump wall (430), the one circumferential sump wall (410), the other axial sump wall (430), and the other circumferential sump wall (410) are sequentially connected to form the radial sump opening (402) of the oil sump (400), and the one axial sump wall (430) is spaced from the other circumferential sump wall (410) to form the circumferential sump opening (401) of the oil sump (400).

4. The reducer (10) according to claim 2, wherein the intermediate gear set (200) comprises an intermediate driven gear (210) and an intermediate shaft (230), the intermediate shaft (230) is configured to fasten the intermediate driven gear (210), the intermediate driven gear (210) is configured to engage with the input gear (100), the output gear (300) is configured to engage with an intermediate drive gear (220) of the intermediate shaft (230), and the intermediate driven gear (210) and the output gear (300) have an overlapping part along the axial direction of the intermediate gear set (200);
the one axial sump wall (430) is stacked on the intermediate gear set (200) along the radial direction of the intermediate gear set (200); and
the other axial sump wall (430) and the output gear (300) are arranged on a same side of the intermediate driven gear (210) along the axial direction of the intermediate gear set (200), and the other axial sump wall (430) and the output gear (300) are arranged at intervals along the radial direction of the intermediate gear set (200).

5. The reducer (10) according to any one of claims 1 to 4, wherein
the shallow sump bottom (451) and the deep sump bottom (452) are arranged along the axial direction of the intermediate gear set (200); and
a distance between the shallow sump bottom (451) and the radial sump opening (402) is shorter than a distance between the deep sump bottom (452) and the radial sump opening (402).

6. The reducer (10) according to claim 5, wherein along the circumferential direction of the intermediate gear set (200), a length of the shallow sump bottom (451) is shorter than a length of the deep sump bottom (452);
the shallow sump bottom (451) is adjacent to the circumferential sump opening (401) along the circumferential direction of the intermediate gear set (200); and
the deep sump bottom (452) is spaced from the circumferential sump opening (401) along the axial direction of the intermediate gear set (200).

7. The reducer (10) according to claim 5, wherein along the circumferential direction of the intermediate gear set (200), a distance between the shallow sump bottom (451) and the output gear (300) is longer than a distance between the deep sump bottom (452) and the output gear (300).

8. The reducer (10) according to any one of claims 1 to 7, wherein the oil sump (400) further comprises two groups of lubricating oil holes (403, 404), each group of lubricating oil holes (403, 404) comprises at least two lubricating oil holes, the at least two lubricating oil hole is arranged at intervals along the axial direction of the intermediate gear set (200), one group of lubricating oil holes (403, 404) are configured to lubricate an engagement position between the intermediate gear set (200) and the input gear (100), and the other group of lubricating oil holes (403, 404) are configured to lubricate an engagement position between the output gear (300) and the intermediate gear set (200);
along the circumferential direction of the intermediate gear set (200), a distance between the one group of lubricating oil holes (403, 404) and the output gear (300) is longer than a distance between the other group of lubricating oil holes (403, 404) and the output gear (300);
the one group of lubricating oil holes (403, 404) and the circumferential sump opening (401) are arranged oppositely along the circumferential direction of the intermediate gear set (200); and
the other group of lubricating oil holes (403, 404) are spaced from the circumferential sump opening (401) along the axial direction of the intermediate gear set (200).

9. The reducer (10) according to any one of claims 1 to 8, wherein the oil sump (400) comprises a plurality of nozzles (470), and the nozzles (470) are configured to convey lubricating oil in the oil sump (400) to a reducer housing (500); and
the plurality of nozzles (470) are distributed on sump walls of the oil sump (400) that are arranged along the axial direction of the intermediate gear set (200), and along the axial direction of the intermediate gear set (200), each nozzle (470) protrudes, away from the inside of the oil sump (400), from a sump wall on which the nozzle (470) is located, and an opening of each nozzle (470) faces away from the inside of the oil sump (400).

10. The reducer (10) according to claim 9, wherein the oil sump (400) comprises a plurality of fastening protrusions (480), and the fastening protrusions (480) are configured to fasten the reducer housing (500);
each fastening protrusion (480) extends away from the inside of the oil sump (400) along the axial direction of the intermediate gear set (200); and
at least one fastening protrusion (480) and at least one nozzle (470) are arranged along the circumferential direction of the intermediate gear set (200), and at least one fastening protrusion (480) and at least one nozzle (470) are arranged along the radial direction of the intermediate gear set (200).

11. The reducer (10) according to any one of claims 2 to 10, wherein the reducer comprises the reducer housing (500) and a reducer end plate (600), space between the reducer housing (500) and the reducer end plate (600) is configured to accommodate the reducer (10) and the oil sump (400), the reducer housing (500) comprises a housing input shaft bearing groove (530), a housing intermediate shaft bearing groove (510), a housing output shaft bearing groove (520), and at least one housing fastening hole (540), and the housing fastening hole (540) is configured to fasten the oil sump (400);
along the axial direction of the intermediate gear set (200), the reducer end plate (600), the one axial sump wall (430), the other axial sump wall (430), and any housing fastening hole (540) of the reducer housing (500) are sequentially arranged; and
a bottom of the space between the reducer housing (500) and the reducer end plate (600) is configured to store lubricating oil, the at least one housing fastening hole (540) is arranged on a side that is of the housing intermediate shaft bearing groove (510) and that is away from the bottom of the space, and the at least one housing fastening hole (540) is arranged between the housing input shaft bearing groove (600) and the housing output shaft bearing groove (520).

12. The reducer (10) according to claim 11, wherein the reducer housing (500) further comprises two housing connection holes (550), and the two housing connection holes (550) of the reducer housing (500) are respectively configured to connect to the housing input shaft bearing groove (600) and the housing output shaft bearing groove (520);
the two housing connection holes (550) are arranged between the housing input shaft bearing groove (600) and the housing output shaft bearing groove (520); and
the two housing connection holes (550) are arranged between the at least one housing fastening hole (540) and the housing intermediate shaft bearing groove (510).

13. The reducer (10) according to claim 12, wherein the reducer housing (500) further comprises an oil outlet hole (570), the oil outlet hole (570) is configured to connect to an oil pump through an internal oil passage of the reducer housing (500), and the oil outlet hole (570) is configured to spray oil into the oil sump (400) through an oil spray nozzle;
the oil outlet hole (570) is arranged between the housing input shaft bearing groove (600) and the housing output shaft bearing groove (520);
along a radial direction of an output shaft, the oil outlet hole (570) is arranged between the at least one housing fastening hole (540) and the housing output shaft bearing groove (520); and
along the radial direction of the intermediate gear set (200), the two housing connection holes (550) are arranged between the oil outlet hole (570) and the housing intermediate shaft bearing groove (510).

14. The reducer (10) according to claim 11, wherein the reducer end plate (600) comprises an end plate input shaft bearing groove (610), an end plate intermediate shaft bearing groove (620), and at least one end plate fastening hole (640), and the end plate fastening hole (640) is configured to fasten the oil sump (400);
the at least one end plate fastening hole (640) is arranged on a side that is of the end plate intermediate shaft bearing groove (620) and that is away from the bottom of the space; and
along the radial direction of the intermediate gear set (200), a distance between each end plate fastening hole (640) and a shaft center of the intermediate shaft (230) is longer than a radius of the intermediate gear set (200).

15. An electric vehicle (1), wherein the electric vehicle (1) comprises a vehicle body (5), a motor (20), and the reducer (10) according to any one of claims 1 to 14, the vehicle body (5) is configured to fasten the motor (20) and the reducer (10), and a motor shaft of the motor (20) is configured to be in transmission connection to an input shaft (110) of the reducer (10).

## Patentansprüche

1. Zweiwege-Ölsammeluntersetzungsgetriebe (10), wobei das Untersetzungsgetriebe ein Antriebsrad (100), einen Zwischenradsatz (200), ein Abtriebsrad (300) und eine Ölwanne (400) umfasst, wobei das Antriebsrad (100) dazu konfiguriert ist, das Abtriebsrad (300) über den Zwischenradsatz (200) in Vorwärts- oder Rückwärtsdrehung anzutreiben, eine Drehrichtung des Zwischenradsatzes (200) einer Drehrichtung des Abtriebsrads (300) entgegengesetzt ist, und die Ölwanne (400) eine radiale Ölwannenöffnung (402) und eine Umfangsölwannenöffnung (401) umfasst;
eine Ausrichtung der radialen Ölwannenöffnung (402) von dem Zwischenradsatz (200) entlang einer radialen Richtung des Zwischenradsatzes (200) entfernt ist;
eine Ausrichtung der Umfangsölwannenöffnung (401) dem Abtriebsrad (300) entlang einer Umfangsrichtung des Zwischenradsatzes (200) zugewandt ist; und
die radiale Ölwannenöffnung (402) mit der Umfangsölwannenöffnung (401) verbunden ist;
**dadurch gekennzeichnet, dass** die Ölwanne (400) ferner einen Ölwannenboden (450) umfasst, der Ölwannenboden (450) einen flachen Ölwannenboden (451) und einen tiefen Ölwannenboden (452) umfasst, der tiefe Ölwannenboden (452) zwei Aussparungsabschnitte (452a) und einen Höckerabschnitt (452b) beinhaltet, die verbunden sind, und die zwei Aussparungsabschnitte (452a) auf zwei Seiten des Höckerabschnitts (452b) entlang der Umfangsrichtung (C) des Zwischenradsatzes (200) angeordnet sind.

2. Untersetzungsgetriebe (10) nach Anspruch 1, wobei die Ölwanne (400) Folgendes umfasst:
zwei Umfangsölwannenwände (410), wobei die zwei Umfangsölwannenwände (410) gegenüber einander entlang der Umfangsrichtung des Zwischenradsatzes (200) angeordnet sind und eine Länge einer Umfangsölwannenwand (410) länger als eine Länge der anderen Umfangsölwannenwand (410) entlang einer axialen Richtung des Zwischenradsatzes (200) ist; und
zwei axiale Ölwannenwände (430), wobei die zwei axialen Ölwannenwände (430) gegenüber einander entlang der axialen Richtung des Zwischenradsatzes (200) angeordnet sind und eine Länge einer axialen Ölwannenwand (430) kürzer als eine Länge der anderen axialen Ölwannenwand (430) entlang der Umfangsrichtung des Zwischenradsatzes (200) ist.

3. Untersetzungsgetriebe (10) nach Anspruch 2, wobei ein Abstand zwischen der einen Umfangsölwannenwand (410) und dem Abtriebsrad (300) größer als ein Abstand zwischen der anderen Umfangsölwannenwand (410) und dem Abtriebsrad (300) ist, die eine axiale Ölwannenwand (430), die eine Umfangsölwannenwand (410), die andere axiale Ölwannenwand (430) und die andere Umfangsölwannenwand (410) nacheinander verbunden sind, um die radiale Ölwannenöffnung (402) der Ölwanne (400) auszubilden, und die eine axiale Ölwannenwand (430) von der anderen Umfangsölwannenwand (410) beabstandet ist, um die Umfangsölwannenöffnung (401) der Ölwanne (400) auszubilden.

4. Untersetzungsgetriebe (10) nach Anspruch 2, wobei der Zwischenradsatz (200) ein angetriebenes Zwischenrad (210) und eine Zwischenwelle (230) umfasst, die Zwischenwelle (230) dazu konfiguriert ist, das angetriebene Zwischenrad (210) zu befestigen, das angetriebene Zwischenrad (210) dazu konfiguriert ist, mit dem Antriebsrad (100) in Eingriff zu stehen, das Abtriebsrad (300) dazu konfiguriert ist, mit einem Zwischenantriebszahnrad (220) der Zwischenwelle (230) in Eingriff zu stehen, und das angetriebene Zwischenrad (210) und das Abtriebsrad (300) einen überlappenden Teil entlang der axialen Richtung des Zwischenradsatzes (200) aufweisen;
die eine axiale Ölwannenwand (430) auf dem Zwischenradsatz (200) entlang der radialen Richtung des Zwischenradsatzes (200) gestapelt ist; und
die andere axiale Ölwannenwand (430) und das Abtriebsrad (300) auf derselben Seite des angetriebenen Zwischenrads (210) entlang der axialen Richtung des Zwischenradsatzes (200) angeordnet sind, und die andere axiale Ölwannenwand (430) und das Abtriebsrad (300) in Intervallen entlang der radialen Richtung des Zwischenradsatzes (200) angeordnet sind.

5. Untersetzungsgetriebe (10) nach einem der Ansprüche 1 bis 4, wobei
der flache Ölwannenboden (451) und der tiefe Ölwannenboden (452) entlang der axialen Richtung des Zwischenradsatzes (200) angeordnet sind; und
ein Abstand zwischen dem flachen Ölwannenboden (451) und der radialen Ölwannenöffnung (402) kürzer als ein Abstand zwischen dem tiefen Ölwannenboden (452) und der radialen Ölwannenöffnung (402) ist.

6. Untersetzungsgetriebe (10) nach Anspruch 5, wobei eine Länge des flachen Ölwannenbodens (451) entlang der Umfangsrichtung des Zwischenradsatzes (200) kürzer als eine Länge des tiefen Ölwannenbodens (452) ist;
der flache Ölwannenboden (451) benachbart an der Umgangsölwannenöffnung (401) entlang der Umfangsrichtung des Zwischenradsatzes (200) liegt; und
der tiefe Ölwannenboden (452) von der Umgangsölwannenöffnung (401) entlang der axialen Richtung des Zwischenradsatzes (200) beabstandet ist.

7. Untersetzungsgetriebe (10) nach Anspruch 5, wobei ein Abstand zwischen dem flachen Ölwannenboden (451) und dem Abtriebsrad (300) entlang der Umfangsrichtung des Zwischenradsatzes (200) länger als ein Abstand zwischen dem tiefen Ölwannenboden (452) und dem Abtriebsrad (300) ist.

8. Untersetzungsgetriebe (10) nach einem der Ansprüche 1 bis 7, wobei die Ölwanne (400) ferner zwei Gruppen von Schmieröllöchern (403, 404) umfasst, jede Gruppe von Schmieröllöchern (403, 404) mindestens zwei Schmieröllöcher umfasst, die mindestens zwei Schmieröllöcher in Intervallen entlang der axialen Richtung des Zwischenradsatzes (200) angeordnet sind, eine Gruppe von Schmieröllöchern (403, 404) dazu konfiguriert ist, eine Eingriffsposition zwischen dem Zwischenradsatz (200) und dem Antriebsrad (100) zu schmieren, und die andere Gruppe von Schmieröllöchern (403, 404) dazu konfiguriert ist, eine Eingriffsposition zwischen dem Abtriebsrad (300) und dem Zwischenradsatz (200) zu schmieren;
ein Abstand zwischen der einen Gruppe von Schmieröllöchern (403, 404) und dem Abtriebsrad (300) entlang der Umfangsrichtung des Zwischenradsatzes (200) länger als ein Abstand zwischen der anderen Gruppe von Schmieröllöchern (403, 404) und dem Abtriebsrad (300) ist;
die eine Gruppe von Schmieröllöchern (403, 404) und die Umfangsölwannenöffnung (401) gegenüber einander entlang der Umfangsrichtung des Zwischenradsatzes (200) angeordnet sind; und die andere Gruppe von Schmieröllöchern (403, 404) von der Umfangsölwannenöffnung (401) entlang der axialen Richtung des Zwischenradsatzes (200) beabstandet sind.

9. Untersetzungsgetriebe (10) nach einem der Ansprüche 1 bis 8, wobei die Ölwanne (400) eine Vielzahl von Düsen (470) umfasst, und die Düsen (470) dazu konfiguriert sind, Schmieröl in der Ölwanne (400) zu einem Untersetzungsgetriebegehäuse (500) zu fördern; und
die Vielzahl von Düsen (470) auf Ölwannenwänden der Ölwanne (400) verteilt sind, die entlang der axialen Richtung des Zwischenradsatzes (200) angeordnet sind, und jede Düse (470) entlang der axialen Richtung des Zwischenradsatzes (200) von der Innenseite der Ölwanne (400) weg von einer Ölwannenwand vorsteht, auf welcher sich die Düse (470) befindet, und eine Öffnung jeder Düse (470) von der Innenseite der Ölwanne (400) abgewandt ist.

10. Untersetzungsgetriebe (10) nach Anspruch 9, wobei die Ölwanne (400) eine Vielzahl von Befestigungsvorsprüngen (480) umfasst, und die Befestigungsvorsprünge (480) dazu konfiguriert sind, das Untersetzungsgetriebegehäuse (500) zu befestigen; sich jeder Befestigungsvorsprung (480) von der Innenseite der Ölwanne (400) entlang der axialen Richtung des Zwischenradsatzes (200) weg erstreckt; und
mindestens ein Befestigungsvorsprung (480) und mindestens eine Düse (470) entlang der Umfangsrichtung des Zwischenradsatzes (200) angeordnet sind, und mindestens ein Befestigungsvorsprung (480) und mindestens eine Düse (470) entlang der radialen Richtung des Zwischenradsatzes (200) angeordnet sind.

11. Untersetzungsgetriebe (10) nach einem der Ansprüche 2 bis 10, wobei das Untersetzungsgetriebe das Untersetzungsgetriebegehäuse (500) und eine Untersetzungsgetriebeendplatte (600) umfasst, ein Raum zwischen dem Untersetzungsgetriebegehäuse (500) und der Untersetzungsgetriebeendplatte (600) dazu konfiguriert ist, das Untersetzungsgetriebe (10) und die Ölwanne (400) aufzunehmen, das Untersetzungsgetriebegehäuse (500) eine Gehäuse-Eingangswellenlagernut (530), eine Gehäuse-Zwischenwellenlagernut (510), eine Gehäuse-Ausgangswellenlagernut (520) und mindestens ein GehäuseBefestigungsloch (540) umfasst, und das GehäuseBefestigungsloch (540) dazu konfiguriert ist, die Ölwanne (400) zu befestigen;
die Untersetzungsgetriebeendplatte (600), die eine axiale Ölwannenwand (430), die andere axiale Ölwannenwand (430) und ein beliebiges Gehäusebefestigungsloch (540) des Untersetzungsgetriebegehäuses (500) entlang der axialen Richtung des Zwischenradsatzes (200) nacheinander angeordnet sind; und
ein Boden des Raums zwischen dem Untersetzungsgetriebegehäuse (500) und der Untersetzungsgetriebeendplatte (600) dazu konfiguriert ist, Schmieröl zu lagern, das mindestens eine Gehäusebefestigungsloch (540) auf einer Seite angeordnet ist, die von der Gehäuse-Zwischenwellenlagernut (510) stammt und die von dem Boden des Raums entfernt ist, und das mindestens eine Gehäusebefestigungsloch (540) zwischen der Gehäuse-Eingangswellenlagernut (600) und der Gehäuse-Ausgangswellenlagernut (520) angeordnet ist.

12. Untersetzungsgetriebe (10) nach Anspruch 11, wobei das Untersetzungsgetriebegehäuse (500) ferner zwei Gehäuseverbindungslöcher (550) umfasst, und die zwei Gehäuseverbindungslöcher (550) des Untersetzungsgetriebegehäuses (500) jeweils dazu konfiguriert sind, sich mit der Gehäuse-Eingangswellenlagernut (600) und der Gehäuse-Ausgangswellenlagernut (520) zu verbinden;
die zwei Gehäuseverbindungslöcher (550) zwischen der Gehäuse-Eingangswellenlagernut (600) und der Gehäuse-Ausgangswellenlagernut (520) angeordnet sind; und
die zwei Gehäuseverbindungslöcher (550) zwischen dem mindestens einen Gehäusebefestigungsloch (540) und der Gehäuse-Zwischenwellenlagernut (510) angeordnet sind.

13. Untersetzungsgetriebe (10) nach Anspruch 12, wobei das Untersetzungsgetriebegehäuse (500) ferner ein Ölauslassloch (570) umfasst, das Ölauslassloch (570) dazu konfiguriert ist, sich über einen internen Öldurchgang des Untersetzungsgetriebegehäuses (500) mit einer Ölpumpe zu verbinden, und das Ölauslassloch (570) dazu konfiguriert ist, über eine Ölspritzdüse Öl in die Ölwanne (400) zu sprühen;
das Ölauslassloch (570) zwischen der Gehäuse-Eingangswellenlagernut (600) und der Gehäuse-Ausgangswellenlagernut (520) angeordnet ist;
das Ölauslassloch (570) entlang einer radialen Richtung einer Ausgangswelle zwischen dem mindestens einen Gehäusebefestigungsloch (540) und der Gehäuse-Ausgangswellenlagernut (520) angeordnet ist; und
die zwei Gehäuseverbindungslöcher (550) in der radialen Richtung des Zwischenradsatzes (200) zwischen dem Ölauslassloch (570) und der Gehäuse-Zwischenwellenlagernut (510) angeordnet sind.

14. Untersetzungsgetriebe (10) nach Anspruch 11, wobei die Untersetzungsgetriebeendplatte (600) eine Endplatten-Eingangswellenlagernut (610), eine Endplatten-Zwischenwellenlagernut (620) und mindestens ein EndplattenBefestigungsloch (640) umfasst, und das EndplattenBefestigungsloch (640) dazu konfiguriert ist, die Ölwanne (400) zu befestigen;
das mindestens eine Endplattenbefestigungsloch (640) auf einer Seite, die von der Endplatten-Zwischenwellenlagernut (620) stammt und die von dem Boden des Raums entfernt ist, angeordnet ist; und
ein Abstand entlang der radialen Richtung des Zwischenradsatzes (200) zwischen jedem Endplattenbefestigungsloch (640) und einer Wellenmitte der Zwischenwelle (230) länger als ein Radius des Zwischenradsatzes (200) ist.

15. Elektrofahrzeug (1), wobei das Elektrofahrzeug (1) eine Fahrzeugkarosserie (5), einen Motor (20) und das Untersetzungsgetriebe (10) nach einem der Ansprüche 1 bis 14 umfasst, die Fahrzeugkarosserie (5) dazu konfiguriert ist, den Motor (20) und das Untersetzungsgetriebe (10) zu befestigen, und eine Motorwelle des Motors (20) dazu konfiguriert ist, in Übertragungsverbindung mit einer Eingangswelle (110) des Untersetzungsgetriebes (10) zu stehen.

## Revendications

1. Réducteur de collecte d'huile à deux voies (10), dans lequel le réducteur comprend un engrenage d'entrée (100), un ensemble d'engrenages intermédiaires (200), un engrenage de sortie (300) et un carter d'huile (400), l'engrenage d'entrée (100) est configuré pour entraîner, via l'ensemble d'engrenages intermédiaires (200), l'engrenage de sortie (300) de manière à tourner dans un sens ou dans l'autre, le sens de rotation de l'ensemble d'engrenages intermédiaires (200) est opposé au sens de rotation de l'engrenage de sortie (300), et le carter d'huile (400) comprend une ouverture de carter radiale (402) et une ouverture de carter circonférentielle (401) ;
une orientation de l'ouverture de carter radiale (402) est éloignée de l'ensemble d'engrenages intermédiaires (200) le long d'une direction radiale de l'ensemble d'engrenages intermédiaires (200) ;
une orientation de l'ouverture de carter circonférentielle (401) fait face à l'engrenage de sortie (300) le long d'une direction circonférentielle de l'ensemble d'engrenages intermédiaires (200) ; et
l'ouverture de carter radiale (402) est reliée à l'ouverture de carter circonférentielle (401) ;
**caractérisé en ce que** le carter d'huile (400) comprend en outre un fond de carter (450), le fond de carter (450) comprend un fond de carter peu profond (451) et un fond de carter profond (452), le fond de carter profond (452) comporte deux sections en creux (452a) et une section en relief (452b) qui sont reliées, et les deux sections en creux (452a) sont disposées de deux côtés de la section en relief (452b) le long de la direction circonférentielle (C) de l'ensemble d'engrenages intermédiaires (200).

2. Réducteur (10) selon la revendication 1, dans lequel le carter d'huile (400) comprend :
deux parois de carter circonférentielles (410), dans lequel les deux parois de carter circonférentielles (410) sont disposées de manière opposée le long de la direction circonférentielle de l'ensemble d'engrenages intermédiaires (200), et une longueur d'une paroi de carter circonférentielle (410) est supérieure à une longueur de l'autre paroi de carter circonférentielle (410) le long d'une direction axiale de l'ensemble d'engrenages intermédiaires (200) ; et
deux parois de carter axiales (430), dans lequel les deux parois de carter axiales (430) sont disposées de manière opposée le long de la direction axiale de l'ensemble d'engrenages intermédiaires (200), et une longueur d'une paroi de carter axiale (430) est plus courte qu'une longueur de l'autre paroi de carter axiale (430) le long de la direction circonférentielle de l'ensemble d'engrenages intermédiaires (200).

3. Réducteur (10) selon la revendication 2, dans lequel un espacement entre la paroi de carter circonférentielle (410) et l'engrenage de sortie (300) est supérieur à un espacement entre l'autre paroi de carter circonférentielle (410) et l'engrenage de sortie (300), la paroi de carter axiale (430), la paroi de carter circonférentielle (410), l'autre paroi de carter axiale (430) et l'autre paroi de carter circonférentielle (410) sont reliées séquentiellement pour former l'ouverture de carter radiale (402) du carter d'huile (400), et la paroi de carter axiale (430) est espacée de l'autre paroi de carter circonférentielle (410) pour former l'ouverture de carter circonférentielle (401) du carter d'huile (400).

4. Réducteur (10) selon la revendication 2, dans lequel l'ensemble d'engrenages intermédiaires (200) comprend un engrenage intermédiaire mené (210) et un arbre intermédiaire (230), l'arbre intermédiaire (230) est configuré pour fixer l'ensemble d'engrenages intermédiaires mené (210), l'ensemble d'engrenages intermédiaires mené (210) est configuré pour venir en prise avec l'engrenage d'entrée (100), l'engrenage de sortie (300) est configuré pour venir en prise avec un engrenage intermédiaire mené (220) de l'arbre intermédiaire (230), et l'ensemble d'engrenages intermédiaires mené (210) et l'engrenage de sortie (300) présentent une partie de chevauchement le long de la direction axiale de l'ensemble d'engrenages intermédiaires (200) ;
la paroi de carter axiale (430) est empilée sur l'ensemble d'engrenages intermédiaires (200) le long de la direction radiale de l'ensemble d'engrenages intermédiaires (200) ; et l'autre paroi de carter axiale (430) et l'engrenage de sortie (300) sont disposés sur un même côté de l'ensemble d'engrenages intermédiaires mené (210) le long de la direction axiale de l'ensemble d'engrenages intermédiaires (200), et l'autre paroi de carter axiale (430) et l'engrenage de sortie (300) sont disposés à intervalles le long de la direction radiale de l'ensemble d'engrenages intermédiaires (200).

5. Réducteur (10) selon l'une quelconque des revendications 1 à 4, dans lequel
le fond de carter peu profond (451) et le fond de carter profond (452) sont disposés le long de la direction axiale de l'ensemble d'engrenages intermédiaires (200) ; et
une distance entre le fond de carter peu profond (451) et l'ouverture de carter radiale (402) est plus courte qu'une distance entre le fond de carter profond (452) et l'ouverture de carter radiale (402).

6. Réducteur (10) selon la revendication 5, dans lequel, le long de la direction circonférentielle de l'ensemble d'engrenages intermédiaires (200), une longueur du fond de carter peu profond (451) est plus courte qu'une longueur du fond de carter profond (452) ;
le fond de carter peu profond (451) est adjacent à l'ouverture de carter circonférentielle (401) le long de la direction circonférentielle de l'ensemble d'engrenages intermédiaires (200) ; et
le fond de carter profond (452) est espacé de l'ouverture de carter circonférentielle (401) le long de la direction axiale de l'ensemble d'engrenages intermédiaires (200).

7. Réducteur (10) selon la revendication 5, dans lequel, le long de la direction circonférentielle de l'ensemble d'engrenages intermédiaires (200), une distance entre le fond de carter peu profond (451) et l'engrenage de sortie (300) est plus longue qu'une distance entre le fond de carter profond (452) et l'engrenage de sortie (300).

8. Réducteur (10) selon l'une quelconque des revendications 1 à 7, dans lequel le carter d'huile (400) comprend en outre deux groupes de trous d'huile de lubrification (403, 404), chaque groupe de trous d'huile de lubrification (403, 404) comprend au moins deux trous d'huile de lubrification, les au moins deux trous d'huile de lubrification sont disposés à intervalles réguliers le long de la direction axiale de l'ensemble d'engrenages intermédiaires (200), un groupe de trous d'huile de lubrification (403, 404) est configuré pour lubrifier une position d'engagement entre l'ensemble d'engrenages intermédiaires (200) et l'engrenage d'entrée (100), et l'autre groupe de trous d'huile de lubrification (403, 404) est configuré pour lubrifier une position d'engagement entre l'engrenage de sortie (300) et l'ensemble d'engrenages intermédiaires (200) ;
le long de la direction circonférentielle de l'ensemble d'engrenages intermédiaires (200), une distance entre le groupe de trous d'huile de lubrification (403, 404) et l'engrenage de sortie (300) est plus longue qu'une distance entre l'autre groupe de trous d'huile de lubrification (403, 404) et l'engrenage de sortie (300) ;
le groupe de trous d'huile de lubrification (403, 404) et l'ouverture de carter circonférentielle (401) sont disposés de manière opposée le long de la direction circonférentielle de l'ensemble d'engrenages intermédiaires (200) ; et
l'autre groupe de trous d'huile de lubrification (403, 404) est espacé de l'ouverture de carter circonférentielle (401) le long de la direction axiale de l'ensemble d'engrenages intermédiaires (200).

9. Réducteur (10) selon l'une quelconque des revendications 1 à 8, dans lequel le carter d'huile (400) comprend une pluralité de buses (470), et les buses (470) sont configurées pour acheminer l'huile de lubrification contenue dans le carter d'huile (400) vers un boîtier du réducteur (500) ; et
la pluralité de buses (470) sont réparties sur les parois du carter d'huile (400) qui sont disposées le long de la direction axiale de l'ensemble d'engrenages intermédiaires (200), et le long de la direction axiale de l'ensemble d'engrenages intermédiaires (200), chaque buse (470) fait saillie, à l'opposé de l'intérieur du carter d'huile (400), à partir d'une paroi du carter sur laquelle la buse (470) est située, et une ouverture de chaque buse (470) est orientée à l'opposé de l'intérieur du carter d'huile (400).

10. Réducteur (10) selon la revendication 9, dans lequel le carter d'huile (400) comprend une pluralité de saillies de fixation (480), et les saillies de fixation (480) sont configurées pour fixer le boîtier du réducteur (500) ;
chaque saillie de fixation (480) s'étend à partir de l'intérieur du carter d'huile (400) le long de la direction axiale de l'ensemble d'engrenages intermédiaires (200) ; et
au moins une saillie de fixation (480) et au moins une buse (470) sont disposées le long de la direction circonférentielle de l'ensemble d'engrenages intermédiaires (200), et au moins une saillie de fixation (480) et au moins une buse (470) sont disposées le long de la direction radiale de l'ensemble d'engrenages intermédiaires (200).

11. Réducteur (10) selon l'une quelconque des revendications 2 à 10, dans lequel le réducteur comprend le boîtier du réducteur (500) et une plaque d'extrémité du réducteur (600), l'espace entre le boîtier du réducteur (500) et la plaque d'extrémité du réducteur (600) est configuré pour accueillir le réducteur (10) et le carter d'huile (400), le boîtier du réducteur (500) comprend une rainure de palier d'arbre d'entrée du boîtier (530), une rainure de palier d'arbre intermédiaire du boîtier (510), une rainure de palier d'arbre de sortie du boîtier (520) et au moins un trou de fixation du boîtier (540), et le trou de fixation du boîtier (540) est configuré pour fixer le carter d'huile (400) ;
le long de la direction axiale de l'ensemble d'engrenages intermédiaires (200), la plaque d'extrémité du réducteur (600), la paroi de carter axiale (430), l'autre paroi de carter axiale (430) et un quelconque trou de fixation du boîtier (540) du boîtier du réducteur (500) sont disposés séquentiellement ; et un fond de l'espace entre le boîtier du réducteur (500) et la plaque d'extrémité du réducteur (600) est configuré pour stocker l'huile de lubrification, l'au moins un trou de fixation du boîtier (540) est disposé sur un côté qui est de la rainure de palier de l'arbre intermédiaire du boîtier (510) et qui est éloigné du fond de l'espace, et l'au moins un trou de fixation du boîtier (540) est disposé entre la rainure de palier de l'arbre d'entrée du boîtier (600) et la rainure de palier de l'arbre de sortie du boîtier (520).

12. Réducteur (10) selon la revendication 11, dans lequel le boîtier du réducteur (500) comprend en outre deux trous de connexion du boîtier (550), et les deux trous de connexion du boîtier (550) du boîtier du réducteur (500) sont respectivement configurés pour être reliés à la rainure de palier de l'arbre d'entrée du boîtier (600) et à la rainure de palier de l'arbre de sortie du boîtier (520) ;
les deux trous de connexion du boîtier (550) sont disposés entre la rainure de palier de l'arbre d'entrée du boîtier (600) et la rainure de palier de l'arbre de sortie du boîtier (520) ; et les deux trous de connexion du boîtier (550) sont disposés entre l'au moins un trou de fixation du boîtier (540) et la rainure de palier de l'arbre intermédiaire du boîtier (510).

13. Réducteur (10) selon la revendication 12, dans lequel le boîtier du réducteur (500) comprend en outre un trou de sortie d'huile (570), le trou de sortie d'huile (570) est configuré pour être relié à une pompe à huile par l'intermédiaire d'un passage d'huile interne du boîtier du réducteur (500), et le trou de sortie d'huile (570) est configuré pour pulvériser de l'huile dans le carter d'huile (400) par l'intermédiaire d'une buse de pulvérisation d'huile ;
le trou de sortie d'huile (570) est disposé entre la rainure de palier de l'arbre d'entrée du boîtier (600) et la rainure de palier de l'arbre de sortie du boîtier (520) ;
le long de la direction radiale d'un arbre de sortie, le trou de sortie d'huile (570) est disposé entre l'au moins un trou de fixation du boîtier (540) et la rainure de palier de l'arbre de sortie du boîtier (520) ; et
le long de la direction radiale de l'ensemble d'engrenages intermédiaires (200), les deux trous de connexion du boîtier (550) sont disposés entre le trou de sortie d'huile (570) et la rainure de palier de l'arbre intermédiaire du boîtier (510).

14. Réducteur (10) selon la revendication 11, dans lequel la plaque d'extrémité du réducteur (600) comprend une rainure de palier d'arbre d'entrée de plaque d'extrémité (610), une rainure de palier d'arbre intermédiaire de plaque d'extrémité (620) et au moins un trou de fixation de plaque d'extrémité (640), et le trou de fixation de plaque d'extrémité (640) est configuré pour fixer le carter d'huile (400) ;
l'au moins un trou de fixation de plaque d'extrémité (640) est disposé sur un côté qui est de la rainure de palier de l'arbre intermédiaire de plaque d'extrémité (620) et qui est éloigné du fond de l'espace ; et
le long de la direction radiale de l'ensemble d'engrenages intermédiaires (200), une distance entre chaque trou de fixation de plaque d'extrémité (640) et un centre d'arbre de l'arbre intermédiaire (230) est plus longue qu'un rayon de l'ensemble d'engrenages intermédiaires (200).

15. Véhicule électrique (1), dans lequel le véhicule électrique (1) comprend une carrosserie (5), un moteur (20) et le réducteur (10) selon l'une quelconque des revendications 1 à 14, la carrosserie (5) est configurée pour fixer le moteur (20) et le réducteur (10), et un arbre moteur du moteur (20) est configuré pour être en connexion de transmission avec un arbre d'entrée (110) du réducteur (10).
